# EUROPÄISCHE PATENTANMELDUNG

(11) **EP 4 007 105 A1**
(43) Veröffentlichungstag der Anmeldung: **01.06.2022**
(21) Anmeldenummer: 20209764.8
(22) Anmeldetag: 25.11.2020
(51) Int. Cl.: H02J 3/14, F03D 7/02, H02J 3/38, H02J 3/00

(54) **VERFAHREN ZUM EINSPEISEN ELEKTRISCHER LEISTUNG IN EIN ELEKTRISCHES VERSORGUNGSNETZ**

(71) Anmelder: Wobben Properties GmbH, 26607 Aurich (DE)
(72) Erfinder: Brombach, Johannes, Berlin (DE)
(74) Vertreter: Eisenführ Speiser

(57) **Zusammenfassung**

Die Erfindung betrifft ein Verfahren zum Einspeisen elektrischer Leistung in ein elektrisches Versorgungsnetz, das eine Netzspannung und eine Netzfrequenz aufweist, und das elektrische Versorgungsnetz (120) umfasst mehrere Verbraucher (324-327, 328, 330) zum Verbrauchen elektrischer Leistung aus dem elektrischen Versorgungsnetz (120), und mehrere Erzeuger (304, 306, 308, 309) zum Erzeugen elektrischer Leistung und zum Einspeisen der elektrischen Leistung in das elektrische Versorgungsnetz (120), wobei zum Führen des Einspeisens eine Einspeiseführung vorgesehen ist und die Einspeiseführung berücksichtigt eine Leistungsflussvorgabe, die eine Vorgabe für einen Leistungsfluss in wenigstens einem Netzabschnitt (300) des elektrischen Versorgungsnetzes (120) bildet, eine Energiebereitstellungsvorgabe, die eine Vorgabe zum Bereitstellen einer Energiemenge an wenigstens einem Verbrauchspunkt des elektrischen Versorgungsnetzes (120) bildet, und eine Stabilitätsvorgabe, die wenigstens ein Stabilitätskriterium für das elektrische Versorgungsnetz vorgibt, wobei die Einspeiseführung in Abhängigkeit von der Leistungsflussvorgabe, der Energiebereitstellungsvorgabe und der Stabilitätsvorgabe einen Führungsregler (302) zum Unterstützen des Einspeisens auswählt oder einstellt.

## Beschreibung

Die vorliegende Erfindung betrifft ein Verfahren zum Einspeisen elektrischer Leistung in ein elektrisches Versorgungsnetz. Die vorliegende Erfindung betrifft auch eine Netzsteuereinrichtung zum Steuern des Einspeisens elektrischer Leistung in ein elektrisches Versorgungsnetz. Die Erfindung betrifft zudem einen Netzabschnitt mit wenigstens einer Windenergieanlage oder wenigstens einem Windpark, oder beidem, zum Einspeisen elektrischer Leistung in ein elektrisches Versorgungsnetz.

Elektrische Versorgungsnetze sind bekannt und sie weisen üblicherweise mehrere Verbraucher auf, die elektrische Leistung aus dem elektrischen Versorgungsnetz verbrauchen, und mehrere Erzeuger, die elektrische Leistung erzeugen und in das elektrische Versorgungsnetz einspeisen. Solche elektrischen Versorgungsnetze können groß und weit verzweigt sein und Leistung über große Entfernungen transportieren, teilweise mehrere hundert Kilometer weit, oder noch weiter.

In einem solchen Energieversorgungssystem muss grundsätzlich immer Stabilität gewährleistet sein. Es muss auch möglichst zu jedem Zeitpunkt ein Gleichgewicht zwischen Erzeugung und Last, also Verbrauch, sichergestellt sein. Die Stabilität wird dabei meist durch die Auslegung der Betriebsmittel und die physikalischen Eigenschaften der Einspeiser, die vereinfachend auch als Erzeuger bezeichnet werden können, und der Lasten, die synonym auch als Verbraucher bezeichnet werden können, möglichst gewährleistet sein. Die physikalischen Eigenschaften der Einspeiser können beispielsweise physikalisch bedingte Fähigkeiten zum Bereitstellen einer Momentanreserve sein, die Fähigkeit einer Spannungsprägung, also insbesondere einer spannungsprägenden Einspeisung, als auch die Fähigkeit, einen Kurzschlussbeitrag leisten zu können.

Neben der zu gewährleistenden Stabilität und dem gewünschten Leistungsgleichgewicht sollte ein Energiesystem grundsätzlich auch ökonomisch optimiert werden. Dazu gehört, die Einspeiser und gegebenenfalls auch die Lasten, oder einige davon, so zu betreiben, dass möglichst geringe Kosten entstehen, während aber möglichst viel Leistung bzw. Energie in das elektrische Versorgungsnetz eingespeist wird.

Um ein elektrisches Versorgungsnetz stabil, aber auch möglichst ökonomisch optimiert zu betreiben, können Regler mit entsprechenden Aufgaben vorhanden sein. Dazu kann ein Leistungssteuerungssystem vorgesehen sein, das dazu vorbereitet ist, ein Leistungsgleichgewicht und/oder einen Leistungsfluss zu steuern. Hierzu kann gehören, in einem vermaschten elektrischen Versorgungsnetz Leistungspfade auszuwählen bzw. Leistung über unterschiedliche Leistungspfade zu steuern, um dadurch Leistungsflussüberlastungen zu vermeiden und möglichst eine Gleichverteilung zu erzielen. Gleiches gilt für das Einspeisen und Verbrauchen elektrischer Leistung, das gegebenenfalls auch gesteuert werden kann, um Leistungsspitzen zu vermeiden.

Außerdem kann ein Energiesteuerungssystem vorgesehen sein, das zum Steuern erzeugter Energie verwendet wird. Das Steuern einer Leistung betrifft insoweit augenblickliche Situationen und hat dabei besonders eine Vermeidung von Leistungsüberhöhungen zur Aufgabe. Idealerweise wird eine Vergleichmäßigung vorgenommen, die aber auch jeweils nur den Augenblick betrifft. Ein Energiesteuersystem zum Steuern erzeugter Energie berücksichtigt dabei auch einen zeitlichen Verlauf und insbesondere einen Zeitabschnitt, in dem bzw. für den die erzeugte Energie gesteuert wird. Besonders kann vorgesehen sein, dass ein Energiesteuersystem die erzeugte Energie so steuert, dass angeforderte Energien bzw. Energiemengen erzeugt und bereitgestellt werden können, wobei das Leistungssteuerungssystem dabei die Leistung, sowohl erzeugte Leistung als auch transportierte Leistung, so steuert, dass das elektrische Versorgungsnetz möglichst gleich belastet wird, zumindest so, dass Überhöhungen der Leistung, also Leistungsspitzen, vermieden werden oder zumindest unter vorgegebenen Grenzen bleiben.

Eine Stabilität wird hierbei grundsätzlich als vorhandene Systemeigenschaft angenommen, also vorausgesetzt, obwohl unterschiedliche Einspeiser und auch Lasten einen unterschiedlichen Einfluss auf die Stabilität haben.

So kann beispielsweise ein konventionelles Kraftwerk, bei dem ein elektrischer Synchrongenerator direkt mit dem elektrischen Versorgungsnetz gekoppelt ist, hinsichtlich Stabilität eine andere Wirkung entfalten als beispielsweise ein Windpark mit vielen modernen und damit großen Windenergieanlagen gleicher oder ähnlicher Nennleistung.

Um eine stabilisierende Wirkung wie bei einem konventionellen Kraftwerk zu erreichen, gibt es Lösungen, die für Windparks ein ähnliches Einspeiseverhalten wie bei einem konventionellen Kraftwerk mit einem direkt gekoppelten Synchrongenerator fordern. Gleiches gilt für andere regenerative Erzeuger, insbesondere Photovoltaikanlagen.

Insoweit können zwar unter bestimmten Voraussetzungen Angleichungen erreicht werden, dennoch bleiben aber die physikalischen Eigenschaften unterschiedlicher Erzeuger unterschiedlich. Dabei können nicht nur die physikalischen Eigenschaften des jeweiligen Erzeugers eine Rolle spielen, sondern auch die Verteilung und/oder der jeweilige konkrete Ort des Erzeugers im elektrischen Versorgungsnetz. Solche Besonderheiten können allein durch ein teilweises Angleichen geforderter Verhalten für einzelne Erzeuger nicht oder zumindest nicht umfänglich berücksichtigt werden.

Der vorliegenden Erfindung liegt somit die Aufgabe zugrunde, zumindest eines der oben genannten Probleme zu adressieren. Insbesondere soll eine Lösung vorgeschlagen werden, die eine Stabilisierung eines elektrischen Versorgungsnetzes steuert, insbesondere unter Berücksichtigung einer Leistungssteuerung durch ein Leistungssteuerungssystem und/oder unter Berücksichtigung einer Steuerung erzeugter Energie durch ein Energiesteuerungssystem. Zumindest soll zu bisher bekannten Lösungen eine Alternative vorgeschlagen werden.

Erfindungsgemäß wird ein Verfahren gemäß Anspruch 1 vorgeschlagen. Das Verfahren betrifft somit das Einspeisen elektrischer Leistung in ein elektrisches Versorgungsnetz. Das elektrische Versorgungsnetz weist eine Netzspannung und eine Netzfrequenz auf. Außerdem umfasst es mehrere Verbraucher zum Verbrauchen elektrischer Leistung aus dem elektrischen Versorgungsnetz, und mehrere Erzeuger zum Erzeugen elektrischer Leistung und zum Einspeisen der elektrischen Leistung in das elektrische Versorgungsnetz. Insoweit wird von einem üblichen elektrischen Versorgungsnetz mit Verbrauchern und Erzeugern ausgegangen.

Zum Führen des Einspeisens ist eine Einspeiseführung vorgesehen. Diese Einspeiseführung kann auch als Steuerung des Einspeisens oder Einspeisesteuerung bezeichnet werden. Sie berücksichtigt eine Leistungsflussvorgabe, die eine Vorgabe für einen Leistungsfluss in wenigstens einem Netzabschnitt des elektrischen Versorgungsnetzes bildet. Eine solche Leistungsflussvorgabe kann eine Obergrenze für einen Leistungsfluss bezeichnen oder eine Aufteilung mehrerer Leistungsflüsse auf mehrere Übertragungspfade, oder eine Vorgabe hinsichtlich Änderungen eines Leistungsflusses, beispielsweise über die Vorgabe maximaler Änderungsgeschwindigkeiten bzw. Änderungsgradienten. Als Leistungsfluss ist dabei die Übertragung elektrischer Leistung über einen Übertragungspfad zu verstehen.

Hier liegt die Erkenntnis zugrunde, dass über solche Übertragungspfade, also insbesondere entsprechende Übertragungsleitungen, nicht beliebig viel Leistung übertragen werden kann und dass das Übertragen elektrischer Leistung auch zu einer Beeinflussung des elektrischen Versorgungsnetzes führt. Insbesondere führt die Übertragung elektrischer Leistung an dem entsprechenden Übertragungspfad, bzw. der entsprechenden elektrischen Leistung, zu einem Spannungsabfall über diesen Pfad bzw. über diese Leitung. Das wiederum beeinflusst eine Spannungshöhe an entsprechenden Knotenpunkten. All dies kann durch eine Leistungsflussvorgabe berücksichtigt oder gesteuert werden. Besonders kann durch eine Leistungsflussvorgabe verhindert werden, dass eine so große Leistung übertragen wird, dass ein entsprechender Übertragungspfad überlastet wird.

Eine Leistungsflussvorgabe kann dabei auch bedeuten, dass ein Leistungsfluss an mehreren Abschnitten, insbesondere für mehrere Übertragungspfade jeweils vorgegeben wird. Solche Übertragungspfade können an Verbindungsknoten verbunden sein, wo dann die Leistungsflüsse zusammenkommen und sich ergänzen, insbesondere sich aufsummieren. Durch eine geeignete Leistungsflussvorgabe kann dann auch verhindert werden, dass ein solches Aufsummieren von Leistungsflüssen zu einer Überlastung führt.

Die Einspeiseführung berücksichtigt außerdem eine Energiebereitstellungsvorgabe, die eine Vorgabe zum Bereitstellen einer Energiemenge an wenigstens einem Verbrauchspunkt des elektrischen Versorgungsnetzes bildet. Hier ist besonders zu berücksichtigen, dass üblicherweise die Energieerzeugung und der Energieverbrauch in einem elektrischen Versorgungsnetz örtlich getrennt sind. An dem Verbrauchspunkt kann beispielsweise durch einen Verbraucher oder eine Gruppe von Verbrauchern eine Energiemenge angefragt sein, die zudem vergütet wird. Diese angefragte Energiemenge sollte dann erfüllt werden und dazu kann eine Energiebereitstellungsvorgabe dienen.

Besonders ist zwischen einer Leistungsflussvorgabe und einer Energiebereitstellungsvorgabe zu unterscheiden. Es wird zwarwenigstens ein Leistungsfluss benötigt, um eine Energie bereitzustellen. Bei der Leistungsflussvorgabe geht es aber um die Übertragung von Leistung über einen Übertragungspfad, wohingegen es bei der Energiebereitstellung um die Bereitstellung der Energie an einem Verbrauchspunkt geht. Die Bereitstellung der Energie an einem Verbrauchspunkt kann auf unterschiedliche Art und Weise realisiert werden, wenn mehrere Übertragungspfade zu diesem Verbrauchspunkt führen. Die Leistungsflussvorgabe und die Energiebereitstellungsvorgabe sind somit zwei getrennte Vorgaben, die beide zu berücksichtigen und dann aufeinander abzustimmen sind.

Außerdem berücksichtigt die Einspeiseführung eine Stabilitätsvorgabe, die wenigstens ein Stabilitätskriterium für das elektrische Versorgungsnetz vorgibt. Eine Stabilitätsvorgabe kann zwar mit der Leistungsflussvorgabe und/oder der Energiebereitstellungsvorgabe zusammenhängen, weil beispielsweise eine Überlastung eines Übertragungspfads zu einer Instabilität führen kann oder die Stabilität schwächen kann. Die Stabilitätsvorgabe ist gleichwohl eine eigenständige Vorgabe, die jedenfalls nicht bei Einhaltung beliebiger Leistungsflussvorgaben automatisch erfüllt wäre. Vielmehr ist eine Stabilitätsvorgabe zusätzlich zu berücksichtigen. Beispielsweise kann die Stabilitätsvorgabe die Einhaltung eines Frequenzbereichs oder die Einhaltung eines Spannungsbereichs betreffen. Sie kann beispielsweise auch die Einhaltung eines Schwingungskriteriums betreffen, demnach nämlich keine zu starken Schwingungen auftreten sollten. Das kann besonders subsynchrone Schwingungen, also Schwingungen geringer Frequenz betreffen. Die Stabilitätsvorgabe kann beispielsweise auch die Vorgabe einer maximalen Netzsensitivität betreffen.

Dazu wird vorgeschlagen, dass die Einspeiseführung in Abhängigkeit von der Leistungsflussvorgabe, der Energiebereitstellungsvorgabe und der Stabilitätsvorgabe einen Führungsregler zum Unterstützen des Einspeisens auswählt.

Hier liegt besonders die Erkenntnis zugrunde, dass bisher das Einspeisen nur eine oder zwei dieser Vorgaben berücksichtigt. Besonders regenerative Energiequellen, also regenerative Einspeiser wie Photovoltaikanlagen, Windenergieanlagen bzw. Windparks speisen bevorzugt in einem sogenannten Netzparallelbetrieb ein. Sie speisen also so viel elektrische Leistung ein wie sie aufgrund der vorherrschenden regenerativen Energiequelle, also besonders Sonneneinstrahlung oder Wind, einspeisen können. Zur Netzstützung können sie auch abgeregelt werden, zum Beispiel, wenn die Netzfrequenz ansteigt und daher von einem Leistungsüberschuss im elektrischen Versorgungsnetz auszugehen ist. Eine solche frequenzabhängige Leistungsreduzierung kann als eine Stabilitätsvorgabe verstanden werden. Eine Leistungsflussvorgabe oder eine Energiebereitstellungsvorgabe wird dabei aber noch nicht berücksichtigt.

Konventionelle Einspeiser, insbesondere Kraftwerke oder Großkraftwerke, speisen regelmäßig in Abhängigkeit von einem Energiebedarf in das elektrische Versorgungsnetz ein. Insoweit berücksichtigen sie eine Energiebereitstellungsvorgabe. Eine Leistungsflussvorgabe wird dabei aber regelmäßig nicht berücksichtigt. Eine Stabilitätsvorgabe wird dabei eher indirekt berücksichtigt, indem das einspeisende Großkraftwerk möglichst einen stabilen Arbeitspunkt bereitzustellen versucht.

Eine Leistungsflussvorgabe kann dann durch entsprechendes Schalten der Netztopologie erreicht werden und auch durch Auswahl, welche Kraftwerke an welchen Orten des elektrischen Versorgungsnetzes einspeisen.

Zu beachten ist auch, dass eine Energiebereitstellungsvorgabe heutzutage häufig von an der Strombörse ausgehandelten Energiepaketen abhängt. Dabei wird von den Akteuren häufig versucht, möglichst preisgünstig Energie einzukaufen bzw. andere versuchen möglichst Energie zu hohen Preisen zu verkaufen. Dies führt dann zu Energiebereitstellungsvorgaben, die im elektrischen Versorgungsnetz umgesetzt werden müssen.

Es wird somit vorgeschlagen, diese drei Vorgaben, also eine Leistungsflussvorgabe, eine Energiebereitstellungsvorgabe und eine Stabilitätsvorgabe gemeinsam zu berücksichtigen und dazu einen Führungsregler vorzuschlagen. Hierbei wurde erkannt, dass bereits die Auswahl eines Führungsreglers von den drei Vorgaben abhängen kann bzw. je nachdem, wie diese drei Vorgaben ausgestaltet sind, ein entsprechender Regler ausgewählt werden kann. Es kommt aber auch in Betracht, ihn einzustellen, besonders dadurch, dass ein Führungsregler mit entsprechenden Funktionalitäten bzw. Reglern bereits existiert, er oder die enthaltenen Regler aber je nach den genannten Vorgaben eingestellt werden.

Als Führungsregler kommt dabei vorzugsweise wenigstens einer der folgenden in Betracht, wobei auch mehrere ausgewählt und kombiniert werden können.

Als ein Führungsregler kann ein Netztopologieregler ausgewählt werden, der dazu vorbereitet ist, eine Netztopologie des elektrischen Versorgungsnetzes zu ändern. Ein Netztopologieregler kann somit insbesondere Schalter im elektrischen Versorgungsnetz schalten, um dadurch insbesondere Leistungsflüsse zu steuern, nämlich Übertragungspfade auszuwählen oder bereitzustellen. Eine Topologieänderung der Netztopologie kann auch beinhalten, dass ein Erzeuger oder Verbraucher zu- oder abgeschaltet wird. Die Auswahl eines Netztopologiereglers ist besonders dann vorzusehen, wenn ungleichmäßige Leistungsflüsse vorgegeben werden, oder wenn stark variierende Leistungsflüsse vorgegeben werden.

Die Auswahl eines Netztopologiereglers kommt besonders auch dann in Betracht, wenn, um ein einfaches Beispiel zu nennen, eine bestimmte Leistung zwischen zwei Punkten übertragen werden soll und dafür mehrere Übertragungspfade in Betracht kommen. Der Netztopologieregler kann dann durch entsprechendes Schalten, oder auch durch entsprechendes Beibehalten bereits vorhandener Übertragungspfade, also durch das Verhindern von Schaltungen, geeignete Übertragungspfade bereitstellen.

Es ist zu berücksichtigen, dass die Einspeiseführung somit die gesamte Koordination übernimmt und dazu entsprechende Führungsregler zur Verfügung stehen. Diese Führungsregler werden dann entsprechend eingesetzt. Ein solcher Vorgang kann sich auch regelmäßig ändern, besonders, wenn sich die Vorgaben ändern.

Jedenfalls kommt als weiterer Regler, der als Führungsregler oder als einer der Führungsregler ausgewählt werden kann, ein Stützregler in Betracht, der dazu ausgebildet ist, eine Netzspannung, eine Netzfrequenz und/oder eine Leistungsbilanz des elektrischen Versorgungsnetzes zu regeln.

Der Stützregler kann dazu besonders Erzeuger bzw. Einspeiser ansteuern bzw. ihnen entsprechende Steuersignale geben. Die Einspeiser können besonders ihre eingespeiste Blindleistung verändern, um die Netzspannung zu beeinflussen, und/oder ihre Blindleistung verändern, um die Netzfrequenz zu verändern. Es sind aber auch Wechselwirkungen vorhanden und Wirk- und Blindleistung können zugleich jeweils an einen sinnvollen Arbeitspunkt angepasst werden. Dadurch kann auch eine Leistungsbilanz des elektrischen Versorgungsnetzes geregelt werden. Eine Leistungsbilanz ist besonders eine Bilanz zwischen bereitgestellter Leistung, also durch Erzeuger eingespeister Leistung, und verbrauchter Leistung, also durch Verbraucher entnommener Leistung.

Eine Leistungsbilanz kann an der Netzfrequenz abgelesen werden, die nämlich bei einem Leistungsüberangebot ansteigt und bei einem Leistungsunterangebot, wenn die Verbraucher also mehr Leistung beziehen wollen als die Erzeuger einspeisen, abfällt. Hier wird aber vorgeschlagen, gegebenenfalls auch anderweitig eine Leistungsbilanz zu betrachten. Eine Möglichkeit besteht darin, entsprechende Verbrauchswerte von den Erzeugern und Verbrauchern, odervon repräsentativen Schlüsselknoten, aufzunehmen. Hierwird nämlich berücksichtigt, dass mit Veränderung des elektrischen Versorgungsnetzes, insbesondere mit Rückgang klassischer Großkraftwerke, die durch direkt gekoppelte Synchrongeneratoren einspeisen, die Netzfrequenz zunehmend ein weniger aussagekräftiger Indikator sein kann.

Jedenfalls kann ein Stützregler auf diese Werte, also insbesondere eingespeiste Wirk-und/oder Blindleistung, Einfluss nehmen.

Die Auswahl eines Stützreglers als Führungsregler oder als ein Teil des Führungsreglers kann besonders dann erfolgen, wenn dies durch eine Stabilitätsvorgabe geboten ist. Die Stabilitätsvorgabe kann dabei auch im Zusammenhang mit einer Stabilitätssituation berücksichtigt werden. Eine Stabilitätsvorgabe kann darin bestehen, für die Netzspannung und/oder die Netzfrequenz eine maximale Schwankungsbreite vorzusehen. Je größer diese Schwankungsbreite ist, umso weniger notwendig kann mitunter ein Stützregler sein. Hier kann aber auch berücksichtigt werden, wie stark eine zulässige Schwankungsbreite bereits aktuell ausgenutzt wird, ob also Netzspannung und/oder Netzfrequenz kurz davor sind, die Grenzen zu erreichen und zu überschreiten.

Die Auswahl eines Stützreglers kommt aber auch dann in Betracht, wenn eine Energiebereitstellungsvorgabe eine große Änderung in Kürze aufweist. Je nach vorhandener Situation kann hierfür die Auswahl eines Netztopologiereglers sinnvoll sein, wenn nämlich - gegebenenfalls unter weiterer Berücksichtigung einer Leistungsflussvorgabe - aktuelle Übertragungspfade nicht auszureichen erscheinen. Liegt dieses Problem nicht vor, kann ein Stützregler ausgewählt werden. Der Stützregler kann aber auch, wenn besagtes Problem nämlich doch vorliegt, auch zusätzlich ausgewählt werden.

Der Stützregler kann besonders dann ausgewählt werden, wenn bei dem genannten Beispiel des Energieanstiegs aufgrund der ansteigenden Energiebereitstellungsvorgabe eine starke Veränderung der Leistungsbilanz zu erwarten ist. Der Stützregler kann dann, oder schon vorher, verwendet werden, um beispielsweise für regenerative Erzeuger kurzfristig eine Vorhalteleistung bereitzustellen. Der Stützregler kann also für einen oder mehrere regenerative Erzeuger vorgeben, dass sie einen bestimmten Wert, zum Beispiel einen bestimmten prozentualen Wert, unterhalb ihrer aktuell verfügbaren Leistung einspeisen. Wenn dann die erkennbare Erhöhung der Energie kommt, also gemäß der Energiebereitstellungsvorgabe, kann diese Vorhalteleistung dann zur Erfüllung oder Unterstützung dieser Energiebereitstellung verwendet werden.

Als Führungsregler oder Teil davon kann auch ein Lastregler ausgewählt werden, der dazu ausgebildet ist, wenigstens einen der Verbraucher zu steuern. Der Lastregler kann insoweit auch als spezieller Stützregler fungieren, der nämlich einen Verbraucher entsprechend steuert. Der Lastregler kann aber auch eingesetzt werden, unabhängig von einem Stützbedarf eine Leistungs- oder Energieverteilung vorteilhaft zu beeinflussen. Besonders kann der Lastregler auch in Abhängigkeit von einer Energiespitze oder Energiesenke ausgewählt werden, die sich durch die Energiebereitstellungsvorgabe ankündigt. Ein steuerbarer Verbraucher kann kurzzeitig auf eine Leistungsaufnahme verzichten, wenn besonders in seiner örtlichen Nähe ein hoher Leistungsbedarf besteht.

Der Lastregler kann dabei besonders auch die Besonderheiten der jeweiligen Last berücksichtigen. Insbesondere kann er dafür sorgen, dass auf eine kurzfristige Reduzierung einer Leistungsaufnahme einer Last auch wieder ein Anstieg der Leistungsaufnahme erfolgt. Das gilt besonders für Lasten, die in einem mittleren Durchschnitt keine veränderte Leistungsaufnahme zulassen oder dies zumindest ungünstig ist. Für andere Lasten, wie beispielsweise eine sogenannte Power-to-Gas-Einheit, die aus elektrischem Strom Wasserstoff oder Erdgas erzeugt, ist auch eine dauerhafte Leistungsänderung zulässig. Stattdessen kann hier das Problem bestehen, dass keine zu schnellen oder zu starken Schwankungen zulässig sind. All das kann der Lastregler berücksichtigen. Besonders kann der Lastregler auch zu einer Verstetigung in dem elektrischen Versorgungsnetz führen. Daher kann er besonders bei entsprechenden Energieschwankungen ausgewählt werden, die sich durch eine entsprechende Energiebereitstellungsvorgabe ankündigen.

Gemäß einem Aspekt wird vorgeschlagen, dass in dem Führungsregler wenigstens eine Stabilisierungsmaßnahme implementiert ist. Diese Stabilisierungsmaßnahme kann durch einen oder mehrere der genannten Regler umgesetzt werden. Das kann also durch den Netztopologieregler, den Stützregler und/oder den Lastregler umgesetzt werden, oder anderweitig. Jedenfalls können dadurch oder anderweitig Stabilisierungsmaßnahmen in dem Führungsregler implementiert sein.

Als eine Implementierungsmaßnahme wird das Einstellen einer Umrichterpenetration eines Netzabschnitts des elektrischen Versorgungsnetzes vorgeschlagen. Die Umrichterpenetration für den Netzabschnitt ist ein Verhältnis von einer Summe durch Umrichter eingespeister Leistung zu insgesamt durch alle Erzeuger eingespeister Leistung. Durch Umrichter, also Frequenzumrichter, wird besonders durch regenerative Erzeuger elektrische Leistung eingespeist. Ihr Anteil an dem Einspeisen in den Netzabschnitt kann hier eingestellt werden.

Hier wurde besonders erkannt, dass diese umrichtergeführten Erzeuger bzw. Einspeiser meistens die Erzeuger mit der schnellsten Regelungsdynamik sind. Sie können sehr schnell auf Leistungseinbrüche reagieren, wenn also plötzlich weniger Leistung eingespeist werden muss, weil beispielsweise ein großer Verbraucher sich abschaltet oder andere Leistungseinbrüche zu erwarten sind. Andererseits können regenerative Erzeuger, sofern sie keine Vorhalteleistung bereitstellen, schlecht die eingespeiste Leistung erhöhen. Liegt also eine Situation vor, in der eine Leistungserhöhung zu erwarten ist, kann vorgesehen sein, den Anteil durch Umrichter eingespeister Leistung zu verringern. Eine solche Verringerung kann zudem unmittelbar zu einer Vorhalteleistung führen.

Andererseits können direkt gekoppelte Synchrongeneratoren besonders von Großkraftwerken eine stabilisierende Wirkung auf das elektrische Versorgungsnetz haben, besonders können sie eine gute Frequenzstabilisierung erreichen. Um solche Stabilitätsanforderungen zu erfüllen, kann es daher sinnvoll sein, die Umrichterpenetration zu verringern.

Das Verringern der Umrichterpenetration kann dabei so erfolgen, dass die entsprechenden Einspeiser bzw. Erzeuger, die nämlich mittels Umrichter einspeisen, ihre eingespeiste Leistung reduzieren. Es kommt aber auch in Betracht, dass Großkraftwerke zugeschaltet werden. Es kommt auch in Betracht, die Umrichterpenetration dadurch zu ändern, dass ein existierender Netzabschnitt mit einem anderen Netzabschnitt verbunden oder von diesem getrennt wird. Hat dieser andere Netzabschnitt eine andere Umrichterpenetration, verändert sich dadurch die gesamte Umrichterpenetration.

Somit kann das Einstellen der Umrichterpenetration durch einen Netztopologieregler, aber auch durch einen Stützregler vorgenommen werden.

Das Erstellen einer Umrichterpenetration wird insbesondere mit einem Netztopologieregler durchgeführt.

Eine Stabilisierungsmaßnahme kann das Bereitstellen einer vorbestimmten Mindestkurzschlussstromkapazität sein, um ein Einspeisen eines Kurzschlussstroms wenigstens bis zu einer Höhe eines vorbestimmten Mindestkurzschlussstroms bei Bedarf zu ermöglichen, zumindest an einem Netzknoten, um dadurch jeweils einen Trennschalter auszulösen, um gezielt einen Netzabschnitt abzutrennen. Besonders ist das Bereitstellen eines Mindestkurzschlussstromes an selektiv schaltenden Elementen vorgesehen, also besonders an selektiven Schutzschaltern.

Eine solche Maßnahme kann besonders dann vorgesehen sein, wenn ein Trennschalter nicht zum Trennen angesteuert werden kann. Solche Trennschalter können als Schutzschalter gegen Überstrom ausgelegt sein und als selektive Schutzschalter bezeichnet werden. Das kurzfristige Bereitstellen eines überhöhten Stroms führt dann zum Auslösen. Ein solcher überhöhter Strom wird gemäß diesem Aspekt somit dadurch bereitgestellt, dass eine Mindestkurzschlussstromkapazität entsprechend hoch bereitgestellt wird.

Eine solche Mindestkurzschlussstromkapazität kann durch eine entsprechende Anzahl Erzeuger erreicht werden und/oder durch ein entsprechendes kurzzeitiges Betreiben der Erzeuger in einem Arbeitspunkt, der einen entsprechend hohen Kurzschlussstrom ermöglicht.

Das Bereitstellen einer vorbestimmten Mindestkurzschlussstromkapazität wird insbesondere durch einen Netztopologieregler ausgeführt.

Gemäß einem Aspekt kann eine Aktivierung wenigstens eines Umrichters einer Photovoltaikanlage zum Bereitstellen eines Kurzschlussstroms oder ergänzenden Kurzschlussstroms zum Aktivieren des Trennschalters vorgesehen sein, um dadurch gezielt den Netzabschnitt abzutrennen. Ein Umrichter eine entsprechende Energie in seinem Zwischenkreis aufweisen und zusätzlich in den Solarzellen, die neben der Stromerzeugung aus Sonneneinstrahlung auch eine hohe Kapazität als Eigenschaft aufweisen. Der Kurzschlussstrom kann besonders als Blindstrom bereitgestellt werden und dieser kann bis zu einer gewissen Restspannung im elektrischen Versorgungsnetz selbst bei abgeschalteter oder nicht vorhandener Primärenergiequelle eingespeist werden. Somit kann hiermit ein STATCOM-Betrieb mit FRT-Eigenschaften erreicht werden.

Daher kann durch einen Umrichter einer Photovoltaikanlage ein entsprechend hoher Kurzschlussstrom bereitgestellt werden. Das soll hier ausgenutzt werden.

Das Aktivieren wenigstens eines Umrichters einer Photovoltaikanlage zum Bereitstellen eines Kurzschlussstroms wird insbesondere durch einen Netztopologiereglerdurchgeführt.

Gemäß einem Aspekt wird vorgeschlagen, eine frequenzabhängige Leistungsregelung zu aktivieren, oder einzustellen. Eine frequenzabhängige Leistungsregelung ist dem Grunde nach bekannt, sie kann einen Zusammenhang, insbesondere linearen Zusammenhang, zwischen einer Frequenzabweichung und einer zusätzlich einzuspeisenden Wirkleistung schaffen. Als zusätzliche Leistung wird hier auch eine verringerte Leistung verstanden. Jedenfalls wird üblicherweise ohnehin elektrische Leistung durch einen Erzeuger eingespeist und diese wird in Abhängigkeit von einer Frequenzabweichung erhöht oder verringert. Der Führungsregler kann eine solche frequenzabhängige Leistungsregelung aktivieren und natürlich auch deaktivieren, aber auch, wenn sie aktiviert ist, einstellen. Insbesondere kann das Verhältnis der Leistungsänderung zur Frequenzabweichung eingestellt werden, nämlich insbesondere über eine Statik.

Das Aktivieren oder Einstellen einer frequenzabhängigen Leistungsregelung wird insbesondere mittels eines Stützreglers durchgeführt.

Gemäß einem Aspekt ist in dem Führungsregler das Aktivieren eines mechanisch rotierenden Phasenschiebers implementiert. Ein solcher mechanisch rotierender Phasenschieber ist mit einem direkt gekoppelten Synchrongenerator verbunden. Ein solcher Phasenschieberweist eine Schwungmasse auf, die nämlich rotiert, und er kann einen Kurzschlussstrom und/oder eine Blindleistung bereitstellen. Dies erfolgt über den Synchrongenerator, der mit dem elektrischen Versorgungsnetz direkt gekoppelt ist. Somit liegt eine rotierende Synchronmaschine vor, die entsprechend physikalisch bedingt bei Spannungsabfall eine Blindleistung einspeisen kann bzw. eingespeiste Blindleistung verändern, also gegebenenfalls auch reduzieren kann.

Außerdem kann ein solcher Synchrongenerator einen Kurzschlussstrom bereitstellen. Zum einen kann dieser dadurch bereitgestellt werden, dass der Generator durch seine Drehung, die durch die Schwungmasse weitergetrieben wird, entsprechenden Strom erzeugt. Ergänzend kann sich der Kurzschlussstrom durch das zusammenbrechende Magnetfeld in dem Kurzschlussfall ergeben.

Auch die Bereitstellung spannungsprägender Eigenschaften kann durch einen rotierenden Phasenschieber erfolgen.

Das Aktivieren eines mechanisch rotierenden Phasenschiebers wird insbesondere mittels eines Stützreglers durchgeführt. Es kommt aber auch in Betracht, dass ein Netztopologieregler diese Aufgabe übernimmt, besonders indem er den Phasenschieber zuschaltet. Besonders dann, wenn eine Kurzschlussleistung bereitgestellt werden soll, bzw. abzusehen ist, dass ein Kurzschlussstrom oder erhöhter Kurzschlussstrom benötigt wird, kommt das in Betracht.

Gemäß einem Aspekt ist in dem Führungsregler als Stabilisierungsmaßnahme implementiert, dass eine spannungsprägende Arbeitsweise aktiviert wird, nämlich wenigstens eines regenerativen Erzeugers, insbesondere einer Windenergieanlage oder Photovoltaikanlage. Es wird also besonders vorgeschlagen, dass ein umrichtergeführter Erzeuger ganz oder teilweise in eine spannungsprägende Arbeitsweise wechselt. Üblicherweise arbeiten umrichtergeführte Erzeuger stromprägend. Sie speisen einen vorgegebenen Strom ein. Dieser wird entweder rechnerisch vorgegeben und durch eine Pulsweitenmodulation erreicht, oder bei Verwendung eines Toleranzbandverfahrens sogar ausgeregelt.

Eine solche stromprägende Arbeitsweise ist daher für umrichtergeführte Erzeuger typisch und mit wenig Regelenergie zu realisieren. Hier wird aber vorgeschlagen, von dieser vorteilhaften und bewährten Arbeitsweise zumindest temporär abzuweichen. Das kann grundsätzlich für den regenerativen Erzeuger ungünstig sein, insbesondere seinen Wirkungsgrad verschlechtern, aber ausnahmsweise zur Spannungsstabilisierung sinnvoll sein, und vorgeschlagen werden. Besonders ist hier wichtig, dass der Führungsregler dies als Möglichkeit implementiert hat und darauf gegebenenfalls zurückgreifen kann.

Gemäß einem Aspekt wird vorgeschlagen, dass als Stabilisierungsmaßnahme in dem Führungsregler implementiert ist, eine in Abhängigkeit von der Netzfrequenz arbeitende Last zu aktivieren oder zu steuern, die eine Leistungsaufnahme in Abhängigkeit von der Netzfrequenz steuert. Hier kann somit eine solche Last aktiviert werden oder es kann für eine existierende Last dieser Modus aktiviert werden. Besonders Lasten, die einen elektrischen Motor oder sogar direkt gekoppelten elektrischen Motor aufweisen, oder die ihre Energie über einen Umrichter aus dem elektrischen Versorgungsnetz beziehen, können eine solche frequenzabhängige Leistungsaufnahme steuern. Das kann auch beinhalten, dass diese Leistungsaufnahme in Abhängigkeit von der Frequenz kurzzeitig negativ ausfällt.

Hier wurde besonders erkannt, dass die Netzstabilität von einer Lastsituation abhängen kann. Durch die vorgeschlagene Maßnahme kann somit die Netzstabilität verbessert werden. Vorzugsweise kann hier auch der Lasttyp geändert werden, nämlich ob die Last eher als ohmsche Last oder als motorische Last arbeitet. Hier kommt besonders in Betracht, dass ein entsprechender Motor angesteuert wird, und/oder angekoppelt oder getrennt wird. Es kommt auch in Betracht, dass bei Verwendung eines Frequenzumrichters dieser gewünschte Verhalten durch entsprechende Programmierung erreichen kann. Beispielsweise kann ein Umrichter so gesteuert werden, dass er einen Strom mit gleicher Phasenlage aus dem elektrischen Versorgungsnetz entnimmt. Erwirkt dann wie ein ohmscher Verbraucher. Er kann aber auch die Phasenlage verändern und je größer der Phasenwinkel wird, umso mehr entfaltet sich eine zusätzliche induktive Eigenschaft, die gegebenenfalls sogar vollständig an die Stelle der ohmschen Eigenschaft treten kann.

Bei entsprechender Verwendung eines direkt gekoppelten Motors kann sogar ein Verhalten erreicht werden, bei dem die Leistungsaufnahme drehzahlabhängig ist und damit eine netzfrequenzabhängige Leistungsaufnahme realisiert wird. Je nach verwendetem oder eingestelltem Motor kann die Lastaufnahme proportional zur dritten Potenz der Drehzahl und damit proportional zur dritten Potenz der Netzfrequenz sein. Hier kommen insbesondere Pumpen und Lüfter in Betracht, die entsprechende Kennlinien aufweisen. Dadurch kann eine sehr starke Stabilisierungswirkung, also eine sehr stark frequenzabhängige Leistungsänderung, erreicht werden.

Das Aktivieren oder Steuern wenigstens einer in Abhängigkeit von der Netzfrequenz arbeitenden Last wird insbesondere mittels eines Lastreglers durchgeführt.

Gemäß einem Aspekt ist in dem Führungsregler eine Stabilisierungsmaßnahme implementiert, die so gestaltet ist, dass wenigstens eine verfügbare Momentanreserve bereitgestellt wird. Insbesondere wird vorgeschlagen, dass eine Momentanreserve durch einen regenerativen Erzeuger bereitgestellt wird. Es kommt auch in Betracht, dass eine verfügbare Momentanreserve erhöht wird. Besonders die Momentanreserve einer Windenergieanlage kann durch Erhöhung einer Rotordrehzahl der Windenergieanlage erhöht werden. Dazu ist zudem eine Regelung der Windenergieanlage bereitzustellen oder ggf. so anzupassen, dass die so verfügbar gemachte Leistung auch entsprechend abgerufen werden kann. Diese Regelung kann als Momentanreserveregelung bezeichnet werden und insbesondere eine Zusatzleistung in Abhängigkeit von einer Frequenzänderung, besonders Frequenzverringerung abgeben.

Eine Momentanreserve kann somit aus Rotationsenergie eines Rotors der Windenergieanlage bereitgestellt werden. Dazu ist es nicht erforderlich, dass der Generator der Windenergieanlage direkt mit dem elektrischen Versorgungsnetz gekoppelt ist. Üblicherweise ist ein Umrichter schnell genug, eine solche Momentanreserve umzusetzen und die Rotation des Rotors liefert die notwendige Energie dafür. Es wird also die Windenergieanlage oder der andere Erzeuger entsprechend geregelt.

Hier liegt besonders die Erkenntnis zugrunde, dass das Bereitstellen einer solchen Momentanreserve gesteuert werden kann, insbesondere das Erhöhen einer Momentanreserve durch eine Drehzahlerhöhung gesteuert werden kann. Die Drehzahlerhöhung einer Windenergieanlage kann, je nach Maß der Erhöhung, nur zu einem minimal erhöhten Verschleiß führen und zu einem minimal verschlechterten Arbeitspunkt. Aber insbesondere bei kurzzeitiger Bereitstellung einer solchen erhöhten Momentanreserve sind diese Auswirkungen vernachlässigbar, bei gleichzeitig großer erzielbarer Wirkung.

Hier wurde auch erkannt, dass tatsächlich, bezogen auf ihre Nennleistung, Windenergieanlagen häufig mehr kinetische Energie speichern können als Großkraftwerke. Das liegt besonders an dem großen Trägheitsmoment dergroßen Rotoren der Windenergieanlagen. Dies wird hier als Stabilisierungsmaßnahme ausgenutzt und ist eine weitere Stabilisierungsmaßnahme, die im Führungsregler implementiert sein kann, auf die der Führungsregler also bei Bedarf zugreifen kann.

Das Bereitstellen wenigstens einer verfügbaren Momentanreserve wird vorzugsweise mit einem Stützregler durchgeführt.

Gemäß einem Aspekt wird eine frequenzabhängige Leistungsregelung verwendet und die ist durch eine Übertragungsfunktion gekennzeichnet. Diese Übertragungsfunktion beschreibt einen Zusammenhang zwischen einer erfassten Frequenz und einer in Abhängigkeit von der erfassten Frequenz einzustellenden Leistung. Dies betrifft insbesondere eine von der Frequenz abhängig eingespeiste Leistung. Insbesondere ist eine frequenzabhängige Leistungsregelung eine solche, bei der die eingespeiste Leistung in Abhängigkeit von der Abweichung der Frequenz von einem Frequenzreferenzwert, insbesondere der Nennfrequenz, zu einer Änderung der eingespeisten Leistung führt.

Insbesondere wird die eingespeiste Leistung in Abhängigkeit von einer Abweichung der Frequenz von einem Referenzwert erhöht oder verringert, insbesondere proportional zur Frequenzabweichung. Es kann auch für die Frequenz ein Totbandbereich vorgesehen sein, sodass als Frequenzreferenzwert ein oberer oder unterer Grenzwert eines solchen Totbandes verwendet wird. Grundsätzlich kann hier eine dem Grunde nach bekannte frequenzabhängige Leistungsregelung verwendet werden bzw. kann hier zugrunde gelegt werden.

Es wird aber weiter vorgeschlagen, dass die Übertragungsfunktion dieser frequenzabhängigen Leistungsregelung in Abhängigkeit von der Leistungsflussvorgabe, der Energiebereitstellungsvorgabe und der Stabilitätsvorgabe eingestellt wird. Hier können besonders Verstärkungsfaktoren und auch die Größe eines Totbandbereichs eingestellt werden. Im Falle einer Proportionalität zwischen Frequenzabweichung und einzustellender Leistungsänderung kann ein entsprechender Verstärkungsfaktor eingestellt werden. Ein solcher Verstärkungsfaktor beschreibt bei grafischer Darstellung dieser proportionalen Abhängigkeit die Steigung des entsprechenden Graphen.

Somit wird insbesondere ein Verstärkungsfaktor eingestellt.

Eine weitere Variante ist, dass eine Aktivierungszeitkonstante eingestellt wird, durch die eine Zeit festgelegt ist, in der nach Erreichen eines Frequenzwertes ein zugeordneter Leistungswert zu erreichen ist. Besonders bei dem Ansteuern von Windenergieanlagen ist zu berücksichtigen, dass diese sehr schnell ihre eingespeiste Leistung ändern können, wesentlich schneller als Großkraftwerke. Eine solche schnelle Veränderbarkeit kann sowohl Vor- als auch Nachteil sein. Wenn eine schnelle Reaktion gefordert wird, ist dies ein ausnutzbarer Vorteil. Es kann dann schnell auf eine Frequenzänderung reagiert werden. Eine Frequenzänderung kann ein Indikator für eine schnelle Leistungsänderung im elektrischen Versorgungsnetz sein, zum Beispiel die plötzliche Trennung eines großen Verbrauchers. Hierauf kann dann durch entsprechende Leistungsreduzierung schnell reagiert werden.

Andererseits kann eine schnelle Leistungsänderung und damit schnelle Regelung die Gefahr einer Überkompensation und damit die Gefahr einer Instabilität bergen. Diesem Aspekt wird dadurch Rechnung getragen, dass die Einstellung in Abhängigkeit von der Stabilitätsvorgabe erfolgt. So kann bei einer besonders hohen Stabilitätsanforderung eine große Aktivierungszeitkonstante sinnvoll sein.

Sowohl die Energiebereitstellungsvorgabe als auch die Leistungsflussvorgabe kann auch Informationen über örtliche Besonderheiten beinhalten, sodass in einem Netzabschnitt beispielsweise eine Leistungsreduzierung eher gewünscht ist als in einem anderen Netzabschnitt. Eine solche Anforderung kann dadurch berücksichtigt werden, dass die Aktivierungszeitkonstante in den beiden beispielhaft genannten Netzabschnitten jeweils unterschiedlich gewählt wird. Dort, wo die Leistungsreduzierung erwünscht ist, kann dann eine geringe Aktivierungszeitkonstante vorgesehen sein. Bei einem Frequenzanstieg würde das dann dort zuerst zu einer Leistungsverringerung führen. Die entfaltet möglicherweise schon eine Wirkung, indem die Frequenz wieder zurückgeht, bevor in dem anderen Netzabschnitt aufgrund der größer gewählten Aktivierungszeitkonstante die Leistungsanpassung begonnen hat.

Ähnliche Gründe können auch bei der Wahl des Verstärkungsfaktors berücksichtigt werden, indem der Verstärkungsfaktor in einem Netzabschnitt größer als in einem anderen gewählt wird. Der Verstärkungsfaktor kann auch faktisch die Regelungsgeschwindigkeit beeinflussen, nämlich dann, wenn sich die Frequenz kontinuierlich verändert. Somit kann eine höhere Stabilitätsanforderung zu einem geringeren Verstärkungsfaktor führen, und umgekehrt.

Gemäß einem Aspekt wird vorgeschlagen, dass eine Regeldynamik eingestellt wird. Hier können ähnliche Überlegungen zugrunde gelegt werden, wie vorstehend zur Einstellung der Aktivierungszeitkonstante erläutert wurde. Eine Regeldynamik kann auch Verstärkungsfaktoren und/oder Zeitkonstanten wie Integrationszeitkonstanten oder Hochlaufzeitkonstanten beinhalten. Im Falle eines linearen Regelsystems kann die Regeldynamik oder ein Teil davon durch das Festlegen von Eigenwerten des geregelten Systems eingestellt werden. Über die Wahl der Eigenwerte kann auch die Stabilität, einschließlich der Schwingfähigkeit, des geregelten Systems festgelegt werden. Für Letzteres ist besonders die Berücksichtigung der Stabilitätsvorgabe sinnvoll.

Die Regeldynamik kann auch örtliche Variationen beinhalten. So kann in einem Netzabschnitt, in dem eine möglichst geringe Leistungsänderung vorgenommen werden sollte, ein entsprechend trägerer Regler, also eine langsame Regeldynamik, eingestellt werden, wohingegen in einem anderen Netzabschnitt, in dem größere Leistungsschwankungen zugelassen sind, ein entsprechend schnellerer Regler eingesetzt und somit eine größere Regeldynamik eingestellt werden.

Besonders wird vorgeschlagen, dass eine Größenordnung einer zu erwartenden Frequenzänderung abgeschätzt wird, oder dass eine maximale Frequenzänderung zugrunde gelegt wird, oberhalb derer nämlich eine Abschaltung des elektrischen Versorgungsnetzes oder eines Teilabschnitts vorgenommen werden muss, oder oberhalb derer andere außerordentliche Stützeingriffe vorgenommen werden müssen. Zu dieser maximalen Frequenzänderung, also dem Betrage nach maximalen Frequenzänderung, kann aufgrund der Regeldynamik eine maximale Leistungsveränderung antizipiert werden. Entsprechend kann ein Leistungsfluss in jeweiligen Übertragungspfaden antizipiert werden und mit einer Leistungsflussvorgabe in diesem Übertragungspfad abgeglichen werden. Die Regeldynamik ist dann also so zu wählen, dass hierbei die Leistungsflussvorgabe eingehalten werden kann.

Die Berücksichtigung der Energiebereitstellungsvorgabe kann zu ähnlichen Grenzen führen. Die Energiebereitstellungsvorgabe kann aber auch Energiemindestwerte vorgeben, die in jedem Fall geliefert werden sollen. Die Regeldynamik kann dann so gewählt werden, dass bei der maximal anzunehmenden Frequenzänderung diese Energiebereitstellung noch gewährleistet werden kann.

Es wird aber zusätzlich die Stabilitätsvorgabe betrachtet und die kann möglicherweise beinhalten, dass ein besonderes Stabilitätsproblem vorliegen kann und dann die Berücksichtigung der Stabilität entsprechend hohe Priorität hat. Das kann dazu führen, dass das Erfüllen der Stabilitätsvorgabe an erster Stelle steht und beispielsweise das Einhalten der genannten und zu liefernden Energiemenge gemäß Energiebereitstellungsvorgabe verletzt werden darf, wenn dies zur Einhaltung der Stabilitätsvorgabe erforderlich ist. Gleiches kann für die Leistungsflussvorgabe gelten, die gegebenenfalls eingehalten werden muss, selbst wenn die Energiebereitstellungsvorgabe nicht eingehalten werden kann.

Es ist aber auch zu berücksichtigen, dass hier die Einspeiseführung auch deswegen vorgeschlagen wird, damit in solchen Fällen möglichst Alternativen gefunden werden, die möglichst alle der drei genannten Vorgaben realisieren können. Führt also beispielsweise die Einstellung einer Regeldynamik, oder andere Art und Weise der Einstellung der Übertragungsfunktion, zu der Überschreitung einer Leistungsflussvorgabe in einem Übertragungspfad, kann möglicherweise dieselbe frequenzabhängige Leistungsregelung dennoch realisiert werden, wenn die Regelung mehrerer Erzeuger entsprechend angepasst wird, sodass diese insgesamt noch dasselbe gewünschte frequenzabhängige Leistungsregelungsverhalten aufweisen, lokal aber so angepasst sind, dass der beispielhaft genannte Übertragungspfad, in dem die Leistungsflussvorgabe anderenfalls verletzt werden würde, weniger belastet wird. Mit anderen Worten wird die frequenzabhängige Leistungsregelung so eingestellt, dass die Leistung über andere Übertragungspfade übertragen wird, zumindest teilweise.

Gemäß einem Aspekt wird vorgeschlagen, dass ein Leistungsverstellgradient eingestellt wird, der für einen Betrag einer frequenzabhängigen Leistungsänderung einen Wert festlegt. Ein solcher Leistungsverstellgradient kann besonders im Bereich von 0,1% bis 100%, insbesondere im Bereich von 1% bis 100% Nennleistung als Leistungsveränderung pro Sekunde liegen. Es wurde erkannt, dass der Bereich recht groß sein kann. Wenn eine schnelle Leistungsregelung erforderlich ist, sollte eine Reduzierung um die gesamte Nennleistung möglichst in einer Sekunde erfolgen. Es wurde aber auch erkannt, dass im Verbund mit großen Kraftwerken ein Gradient von 10 % pro Minute vorgesehen sein kann, damit die Großkraftwerke diesem Gradienten folgen können.

Hier liegt besonders der Gedanke zu Grunde, dass starke Frequenzänderungen auftreten, die besonders durch ein Trennen einer Einspeiseeinheit wie ein Großkraftwerk hervorgerufen werden können. Es muss dann eine schnelle Bereitstellung einer Primärregelenergie gewährleistet werden. Hier wäre grundsätzlich eine möglichst schnelle Leistungserhöhung wünschenswert, die aber aus Stabilitätsgründen begrenzt sein kann. Dafür kann ein Maximalwert für den Leistungsverstellgradienten vorgesehen sein, der zu einer solchen Begrenzung führt.

Es kommt aber auch in Betracht, dass in einem solchen Fall eine Leistungsaktivierung bzw. ein Leistungsaktivierungsverlauf vorgegeben ist, der eine einzuhaltende Vorgabe ist, und insbesondere als Aktivierungsfahrplan vorgegeben sein kann. Dadurch kann der Leistungsverstellgradient als fester Wert oder als Mindestwert vorgegeben sein, denn besonders die langsamen Einspeiser wie Großkraftwerke werden einen solchen Mindestwert nicht überschreiten, so dass er für sie im Wesentlichen wie ein fester Wert wirkt.

In diesen beiden Fällen wird die Auslösung des Bereitstellens einer solchen Primärregelenergie durch ein entsprechendes Frequenzverhalten ausgelöst, so dass auch dies eine frequenzabhängige Leistungsregelung ist.

Dieser Leistungsverstellgradient wird vorzugsweise auf eine Totzeit abgestimmt, weil beide Größen zusammen die Aktivierungszeitkonstante festlegen können, in der nach Erreichen eines Frequenzwertes ein zugeordneter Leistungswert zu erreichen ist.

Gemäß einem Aspekt wird vorgeschlagen, dass die Aktivierung einer spannungsprägenden Arbeitsweise wenigstens eines regenerativen Erzeugers der Erzeuger so erfolgt, dass wenigstens ein regenerativer Erzeuger mehrere Einspeiseeinheiten aufweist, die insbesondere jeweils als Umrichter ausgebildet sind, und dass zur Aktivierung einer spannungsprägenden Arbeitsweise wenigstens eine der Einspeiseeinheiten von einer stromprägenden Arbeitsweise in eine spannungsprägende Arbeitsweise wechselt.

Hier liegt besonders der Gedanke zugrunde, dass regenerative Erzeuger, insbesondere Windenergieanlagen, mittels vieler parallel geschalteter Umrichter, die auch als Wechselrichter ausgebildet sein können, in das elektrische Versorgungsnetz in einer stromprägenden Arbeitsweise einspeisen. Eine stromprägende Arbeitsweise wurde oben bereits erläutert und sie gibt im Wesentlichen einen einzuspeisenden Strom vor und versucht diesen in das Netz einzuprägen. Eine solche Arbeitsweise ist bei der Verwendung von Umrichtern oder Wechselrichtern mit vergleichsweise wenig Bedarf an Stellenergie zum Umsetzen der Regelung verbunden. Es kann vergleichsweise konstant Leistung durch dieses Verfahren eingespeist werden.

Je nach Lastsituation, und damit je nach Leistungsflussvorgabe, Energiebereitstellungsvorgabe und Stabilitätsvorgabe, kann eine zumindest unterstützende Spannungsprägung durch Windenergieanlagen oder andere regenerative Einspeiser in Betracht kommen.

Es ist nicht unbedingt erforderlich, dass dann alle regenerativen Einspeiser spannungsprägend einspeisen, sondern eine Teilunterstützung kann häufig ausreichen. Um damit die Last der Spannungsprägung besser auf die regenerativen Erzeuger zu verteilen, wird somit vorgeschlagen, nur einen Teil der Umrichter jedes regenerativen Erzeugers, der dazu herangezogen wird, für die spannungsprägende Einspeisung, also spannungsprägende Arbeitsweise, zu aktivieren. Hier kann besonders auch ein Grad der Aktivierung, also wie viele der Umrichter des jeweiligen regenerativen Erzeugers zur spannungsprägenden Arbeitsweise aktiviert werden, eingestellt werden. Auch das kann für unterschiedliche regenerative Erzeuger, besonders abhängig von ihrem Ort im elektrischen Versorgungsnetz, unterschiedlich vorgegeben werden. All das kann die Einspeiseführung koordinieren bzw. durchführen. Beispielsweise kann eine zentrale Steuereinheit diese Aktivierung spannungsprägender Arbeitsweise einiger Umrichter koordinieren oder steuern.

Gemäß einem Aspekt wird vorgeschlagen, dass die Aktivierung oder das Steuern wenigstens einer in Abhängigkeit von der Netzfrequenz arbeitenden Last, die eine Leistungsaufnahme in Abhängigkeit von der Netzfrequenz steuert, so erfolgt, dass eine Lastsituation erfasst wird und die Aktivierung bzw. das Steuern der wenigstens einen Last in Abhängigkeit von der erfassten Lastsituation erfolgt. Eine Lastsituation ist insoweit eine Situation, die wiedergibt, mit wieviel Verbrauchsleistung Verbraucher und welche Art Verbraucher mit dem elektrischen Versorgungsnetz gekoppelt sind.

Hier wurde besonders erkannt, dass unterschiedliche Lastsituationen vorliegen können, und dass diese Lastsituationen durch den Lastregler beeinflusst werden können. Im Idealfall kann eine gewünschte Lastsituation eingestellt werden.

Die Art der Verbraucher unterscheidet besonders zwischen ohmscher Last und motorischer Last. Eine ohmsche Last ist durch eine im Wesentlichen von der Netzfrequenz unabhängige Leistungsaufnahme gekennzeichnet. Ändert sich also die Netzfrequenz, ändert sich die Leistungsaufnahme der ohmschen Last nicht oder nicht nennenswert. Eine motorische Last ist durch eine im Wesentlichen stark von der Netzfrequenz abhängige Leistungsaufnahme gekennzeichnet. Ändert sich also die Netzfrequenz, so ändert sich auch die Leistungsaufnahme der motorischen Last. Besonders kann die motorische Last dadurch gekennzeichnet sein, dass ihre Leistungsaufnahme zumindest proportional zur Netzfrequenz ist. Es wurde erkannt, dass das bspw. bei Hebevorrichtungen oder Fließbändern der Fall sein. Insbesondere ist ihre Leistungsaufnahme in einem Nennbetriebspunkt zumindest proportional zur Netzfrequenz, vorzugsweise mit zweiter oder dritter Potenz proportional zur Netzfrequenz, also proportional zu der zweiten oder dritten Potenz der Netzfrequenz.

Eine motorische Last ist somit insbesondere ein direkt mit dem elektrischen Versorgungsnetz gekoppelter Motor, bzw. elektrische Maschine.

Die so erfasste Lastsituation lässt somit Aussagen über das Verhalten des elektrischen Versorgungsnetzes zu. Liegt, was hier als einfaches Beispiel dienen soll, ausschließlich eine Lastsituation mit motorischen Lasten vor, verhält sich dieses elektrische Versorgungsnetz gänzlich anders, als wenn ausschließlich ohmsche Lasten vorlägen. Die Lasten und damit das elektrische Versorgungsnetz insgesamt reagieren besonders auf eine Frequenzänderung auch entsprechend unterschiedlich. Das wird beim Aktivieren bzw. Steuern der wenigstens einen Last berücksichtigt.

Besonders, um bei dem vereinfachten Beispiel zu bleiben, führt eine insgesamt motorische Last dazu, dass diese schon von sich aus auf einen Frequenzanstieg mit einer höheren Leistungsaufnahme reagiert und damit der Ursache für diesen Frequenzanstieg entgegenwirkt. Entsprechend kann auch die frequenzabhängige Leistungsregelung dieses Verhalten mit berücksichtigen, es braucht dann nämlich selbst nur entsprechend weniger auf Frequenzänderungen zu reagieren. Anderenfalls kann sie entsprechend stärker auf Frequenzänderungen reagieren. Entsprechend kann das Aktivieren oder Steuern der wenigstens einen Last die Lastsituation berücksichtigen und damit das damit verbundene Netzverhalten berücksichtigen.

Außerdem oder alternativ wird vorgeschlagen, dass zum Aktivieren bzw. Steuern der wenigstens einen in Abhängigkeit von der Netzfrequenz arbeitenden Last aus mehreren zur Verfügung stehenden Lasten ausgewählt wird. Es liegen also in diesem Fall wenigstens zwei Lasten vor. Wenigstens eine der Lasten ist eine ohmsche Last und wenigstens eine weitere der Lasten ist eine motorische Last. Die Unterschiede wurden oben bereits erläutert. Hier wird dann vorgeschlagen, dass durch die Auswahl von Anzahl und Art der Lasten eine entsprechend frequenzabhängig arbeitende Last im Grunde zusammengestellt wird. Werden viele motorische Lasten ausgewählt, dominiert eine frequenzabhängige Leistungsaufnahme. Bei vielen ohmschen Lasten wird diese Eigenschaft entsprechend abgeschwächt.

Besonders kann diese Auswahl in Abhängigkeit von einer erfassten Lastsituation vorgenommen werden. Insbesondere sind möglichst viele motorische Lasten vorzusehen, wenn das Erfassen der Lastsituation ergeben hat, dass eine stark ohmsche Lastsituation vorliegt, und umgekehrt.

Besonders bei der Verwendung eines Frequenzumrichters, der auch als Frequenzwechselrichter bezeichnet werden kann, ist zudem die Betriebsart der Last, quasi aus Netzsicht, veränderbar.

Wird eine Last mittels eines Frequenzumrichters angesteuert oder beinhaltet sie diesen, so ist der Frequenzumrichter einerseits mit dem elektrischen Versorgungsnetz gekoppelt, andererseits steuert er einen Verbraucher an, also ein Gerät, wie beispielsweise einen drehzahlgesteuerten Motor oder eine Ladestation zum Laden elektrischer Speicher, wie beispielsweise von Elektrofahrzeugen. Dieser Frequenzumrichter kann nicht nur den Verbraucher ansteuern, sondern er kann auch steuern, wie die elektrische Leistung aus dem elektrischen Versorgungsnetz entnommen wird. Er kann quasi eine negative Einspeisung steuern. Dadurch kann er auch steuern, ob Frequenzänderungen zu Leistungsänderungen führen, oder nicht. Dadurch kann dieselbe Last durch Verwendung eines solchen Frequenzumrichters ein motorisches Verhalten aufweisen, also als motorische Last betrieben werden, oder ein ohmsches Verhalten aufweisen, also als ohmsche Last betrieben werden. Auch dadurch kann der Lastsituation im elektrischen Versorgungsnetz Rechnung getragen werden.

Gemäß einem Aspekt wird vorgeschlagen, dass das Verfahren so arbeitet, dass eine Lastsituation erfasst wird, wobei eine Lastsituation beschreibt, wieviel Leistung durch welche Art Verbraucher verbraucht wird, insbesondere, wieviel Leistung jeweils oder anteilig verbraucht wird durch ohmsche Verbraucher, und motorische Verbraucher und optional mittels Frequenzumrichter gesteuerter Verbraucher, und wobei der Führungsregler in Abhängigkeit von der erfassten Lastsituation ausgewählt oder eingestellt wird.

Hier wurde besonders erkannt, dass nicht nur das Steuern einer Last in Abhängigkeit von einer Lastsituation sinnvoll ist, sondern dass auch der Führungsregler, also auch der Netztopologieregler und der Stützregler an die Lastsituation angepasst werden kann. Es wurde erkannt, dass auch die Lastsituation das Netzverhalten beeinflusst und zwar auch hinsichtlich Art der Reaktion, also nicht nur in der Menge der verbrauchten Leistung.

Erfindungsgemäß wird auch eine Netzsteuereinrichtung vorgeschlagen, nämlich eine Netzsteuereinrichtung zum Steuern eines elektrischen Versorgungsnetzes zum Einspeisen elektrischer Leistung in das elektrische Versorgungsnetz, das eine Netzspannung und eine Netzfrequenz aufweist, und das elektrische Versorgungsnetz umfasst
- mehrere Verbraucher zum Verbrauchen elektrischer Leistung aus dem elektrischen Versorgungsnetz, und
- mehrere Erzeuger zum Erzeugen elektrischer Leistung und zum Einspeisen der elektrischen Leistung in das elektrische Versorgungsnetz, wobei
- zum Führen des Einspeisens eine Einspeiseführung vorgesehen ist und
- die Einspeiseführung berücksichtigt
   - eine Leistungsflussvorgabe, die eine Vorgabe für einen Leistungsfluss in wenigstens einem Netzabschnitt des elektrischen Versorgungsnetzes bildet,
   - eine Energiebereitstellungsvorgabe, die eine Vorgabe zum Bereitstellen einer Energiemenge an wenigstens einem Verbrauchspunkt des elektrischen Versorgungsnetzes bildet, und
   - eine Stabilitätsvorgabe, die wenigstens ein Stabilitätskriterium für das elektrische Versorgungsnetz vorgibt, wobei
- die Einspeiseführung in Abhängigkeit von
   - der Leistungsflussvorgabe,
   - der Energiebereitstellungsvorgabe und
   - der Stabilitätsvorgabe
- einen Führungsregler zum Unterstützen des Einspeisens auswählt oder einstellt.

Insbesondere weist eine solche Netzsteuereinrichtung eine zentrale Steuereinheit auf, die Erzeuger und/oder Lasten und/oder Schaltmittel und gegebenenfalls weitere Elemente des elektrischen Versorgungsnetzes, z.B. Stufentransformator, zentral ansteuert. Auf diese zentrale Steuereinheit kann die Einspeiseführung implementiert sein. Insbesondere ist die Netzsteuereinrichtung und dabei insbesondere die zentrale Steuereinheit dazu vorbereitet, ein Verfahren gemäß einer der vorstehend beschriebenen Aspekte auszuführen.

Erfindungsgemäß wird zudem ein Netzabschnitt eines elektrischen Versorgungsnetzes vorgeschlagen, nämlich ein Netzabschnitt eines elektrischen Versorgungsnetzes mit
- wenigstens einer Windenergieanlage und/oder wenigstens einem Windpark mit mehreren Windenergieanlagen,
   und das elektrische Versorgungsnetz umfasst
   - mehrere Verbraucher zum Verbrauchen elektrischer Leistung aus dem elektrischen Versorgungsnetz, und
   - mehrere Erzeuger zum Erzeugen elektrischer Leistung und zum Einspeisen der elektrischen Leistung in das elektrische Versorgungsnetz, wobei
   - diese Erzeuger die wenigstens eine Windenergieanlage oder den wenigstens einen Windpark umfassen,
- zum Führen des Einspeisens eine Einspeiseführung vorgesehen ist und
- die Einspeiseführung berücksichtigt
   - eine Leistungsflussvorgabe, die eine Vorgabe für einen Leistungsfluss in wenigstens einem Netzabschnitt des elektrischen Versorgungsnetzes bildet,
   - eine Energiebereitstellungsvorgabe, die eine Vorgabe zum Bereitstellen einer Energiemenge an wenigstens einem Verbrauchspunkt des elektrischen Versorgungsnetzes bildet, und
   - eine Stabilitätsvorgabe, die wenigstens ein Stabilitätskriterium für das elektrische Versorgungsnetz vorgibt, wobei
- die Einspeiseführung in Abhängigkeit von
   - der Leistungsflussvorgabe,
   - der Energiebereitstellungsvorgabe und
   - der Stabilitätsvorgabe
- einen Führungsregler zum Unterstützen des Einspeisens auswählt oder einstellt, und
- der Führungsregler zum Steuern des elektrischen Versorgungsnetzes die wenigstens eine Windenergieanlage oder den wenigstens einen Windpark ansteuert.

Ein solcher Netzabschnitt umfasst somit wenigstens eine Windenergieanlage oder einen Windpark mit mehreren Windenergieanlagen. Dieser Netzabschnitt kann zum Steuern des elektrischen Versorgungsnetzes verwendet werden und dazu wird er über den Führungsregler angesteuert. Insbesondere wird aber nicht nur diese wenigstens eine Windenergieanlage oder dieser wenigstens eine Windpark durch den Führungsregler angesteuert, sondern auch die weiteren Erzeuger und/oder Lasten und gegebenenfalls Schaltmittel und weitere Elemente in dem elektrischen Versorgungsnetz. Hier wurde besonders erkannt, dass diese wenigstens eine Windenergieanlage oder dieser wenigstens eine Windpark sehr gut angesteuert und zur Steuerung des elektrischen Versorgungsnetzes benutzt werden kann.

Insbesondere weist der Netzabschnitt eine zentrale Steuereinheit auf, die zum Beispiel örtlich in der wenigstens einen Windenergieanlage oder dem wenigstens einen Windpark angeordnet sein kann und eine zentrale Steuerung vorsehen kann, um damit auch das elektrische Versorgungsnetz mittels dieses Netzabschnitts zu steuern oder zumindest mitzusteuern.

Insbesondere ist vorgesehen, dass der Netzabschnitt, insbesondere die zentrale Steuereinheit darin, dazu vorbereitet ist, eins der vorstehend beschriebenen Verfahren umzusetzen. Ein solches Verfahren kann somit in der zentralen Steuereinheit implementiert sein. Besonders die Merkmale, die das Ansteuern regenerativer Erzeuger betreffen, werden vorzugsweise ganz oder teilweise auf dieser wenigstens einen Windenergieanlage oder diesem wenigstens einen Windpark ausgeführt.

Die Erfindung wird nun nachfolgend exemplarisch anhand von Ausführungsformen unter Bezugnahme auf die begleitenden Figuren näher erläutert.
- Fig. 1: zeigt eine Windenergieanlage in einer perspektivischen Darstellung.
- Fig. 2: zeigt einen Windpark in einer schematischen Darstellung.
- Fig. 3: zeigt schematisch einen Netzabschnitt eines elektrischen Versorgungsnetzes.
- Fig. 4: zeigt eine vereinfachte Netztopologie zur Veranschaulichung einer weiteren Ausführungsform.

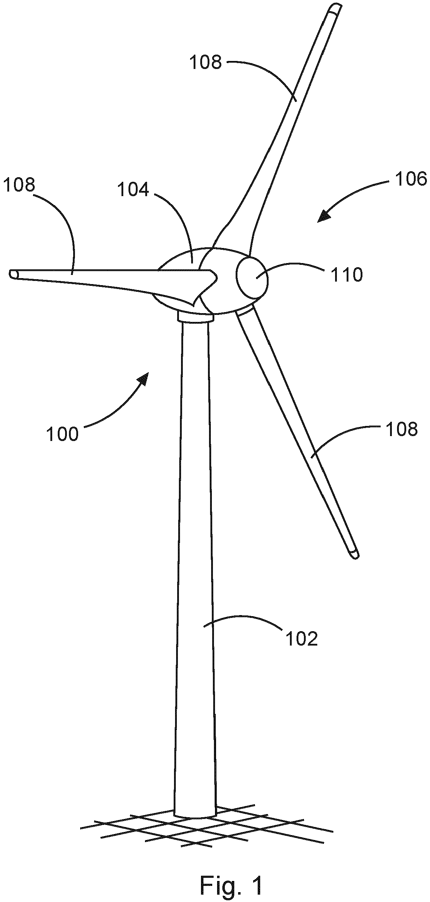

**Fig.** 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

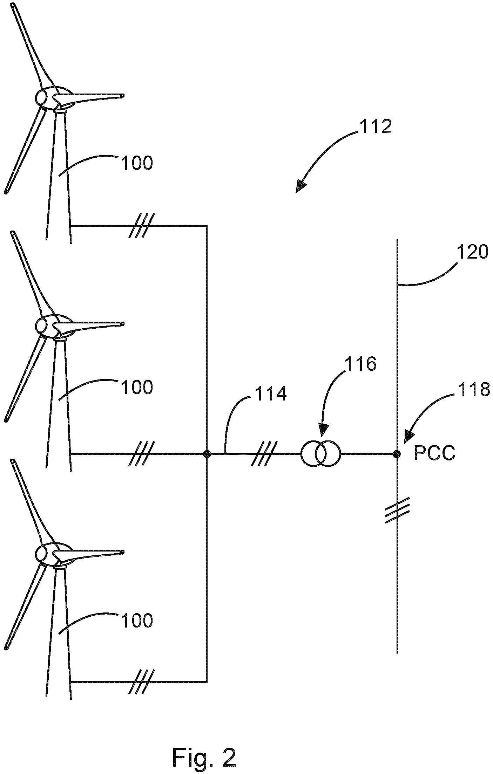

**Fig.** 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112.

Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das elektrische Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Die vorliegende Erfindung betrifft besonders ein Verfahren zum Stabilisieren eines elektrischen Versorgungsnetzes als auch eine entsprechende Netzsteuereinrichtung. In einem solchen elektrischen Versorgungsnetz sind besonders bevorzugt ein oder mehrere Windenergieanlagen wie in Fig. 1 gezeigt und/oder ein oder mehrere Windparks wie in Fig. 2 gezeigt vorhanden und speisen in das elektrische Versorgungsnetz ein. Solche Windenergieanlagen oder Windparks können dabei auch einen Beitrag zum Stabilisieren leisten. Besonders kann eine Windenergieanlage oder auch ein Windpark Teil der Netzsteuereinrichtung sein oder zumindest mit einer solchen verbunden sein. Dadurch kann die Windenergieanlage bzw. der Windpark unmittelbar eine Stabilisierungsmaßnahme ausführen oder unterstützen. Die Windenergieanlage bzw. der Windpark kann auch Informationen bereitstellen, um eine Stabilitätssystemeigenschaft zu ermitteln. Vorzugsweise wird vorgeschlagen, insbesondere für jegliche Variationen, dass die Netzsteuereinrichtung in einer Windenergieanlage und/oder in einem Windpark implementiert ist bzw. dass die Windenergieanlage bzw. der Windpark die Netzsteuereinrichtung bildet.

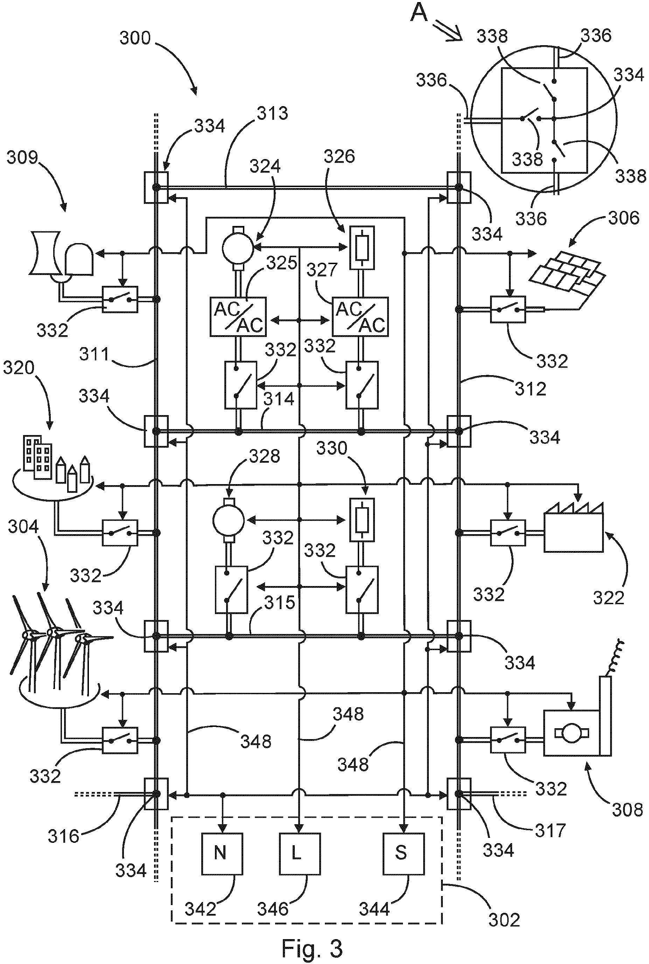

**Fig. 3** zeigt schematisch einen Netzabschnitt 300 mit einem Führungsregler 302 in einer schematischen Darstellung. In dieser schematischen Darstellung sind Energieleitungen durch Doppellinien gekennzeichnet, wohingegen einfache Linien repräsentativ für Datenleitungen stehen. Sie symbolisieren Datenübertragungswege, die aber nicht unbedingt leitungsgebunden sein müssen.

Zur Veranschaulichung weist der Netzabschnitt 300 unter anderem zwei Hauptstränge 311 und 312 sowie drei Querstränge 313 - 315 auf. Auf die genaue Struktur kommt es aber nicht an und die Einteilung in diese beispielhaften beiden Hauptstränge und drei Querstränge ist im Wesentlichen nur zur Veranschaulichung gewählt, um diesem schematisch dargestellten Netzabschnitt eine gewisse Struktur zu geben, die aber im Wesentlichen der Erläuterung dient. Gleichwohl könnten die beiden Hauptstränge eine höhere Spannung aufweisen und beispielsweise Teil eines Hochspannungsnetzes sein, wohingegen die Querstränge beispielsweise eine Mittelspannung aufweisen könnten.

Entsprechend wird bereits hier darauf hingewiesen, dass in der schematischen Darstellung der Fig. 3 keinerlei Transformatoren eingezeichnet sind, obwohl davon aber sehr viele vorhanden sein können. Besonders die beispielhaft genannte unterschiedliche Spannungshöhe zwischen Hauptsträngen und Quersträngen, wenn sie denn vorliegt, würde natürlich Transformatoren erforderlich machen. Zudem sind zwei Abzweigstränge 316 und 317 angedeutet und mit gepunkteten Linien versehen, die nur veranschaulichen sollen, dass die entsprechenden Leitungen sich hier fortsetzen können. Aus demselben Grunde sind dort und auch an den Hauptsträngen 311 und 312 gepunktete Linien eingezeichnet, um die mögliche Fortsetzung anzudeuten.

Der Netzabschnitt 300 weist exemplarisch diverse Erzeuger und Verbraucher auf. Als Erzeuger sind beispielhaft ein Windpark 304, eine Photovoltaikanlage 306 und zwei konventionelle Kraftwerke 308 und 309 dargestellt.

Als Verbraucher ist eine Stadt 320 angedeutet, sowie eine Fabrik 322. Außerdem ist ein motorischer Verbraucher 324 sowie ein ohmscher Verbraucher 326 jeweils mit Frequenzumrichteransteuerung exemplarisch eingezeichnet, sowie ein motorischer Verbraucher 328 und ein ohmscher Verbraucher 330 jeweils ohne Frequenzumrichteransteuerung.

All diese Verbraucher und Erzeuger stehen letztlich auch repräsentativ für weitere Verbraucher bzw. Erzeuger, insbesondere jeweils für gleichartige Verbraucher bzw. Erzeuger.

Sämtliche Verbraucher und Erzeuger sind jeweils über einen Netztrennschalter 332 mit dem jeweiligen Strang, also mit einem Hauptstrang oder Querstrang, verbunden bzw. darüber dort angeschlossen. Diese Netztrennschalter 332 können sich unterscheiden, besonders in ihrer Leistungsklasse und auch zu trennenden Spannungshöhe. Der Einfachheit halber ist hier aber für alle Trennschalter dasselbe Bezugszeichen 332 verwendet worden.

In Verbindungsknoten zwischen verschiedenen Strängen, insbesondere zwischen einem Hauptstrang und einem Querstrang oder einem Hauptstrang und einem Abzweigstrang, ist jeweils ein Netzknoten 334 vorgesehen. Jeder dieser Netzknoten 334 ist zeichnerisch mit einem Rahmen dargestellt, in dem jeweils Trennschalter vorgesehen sind, um nämlich jeden Leitungsstrang dieses Netzknotens auftrennen oder eben wieder verbinden zu können.

Diese Struktur der Netzknoten 334 ist in der vergrößerten Darstellung A genauer dargestellt. Darin ist zu sehen, dass zwischen einem Leitungsstrang 336 und dem Netzknoten jeweils ein Trennschalter 338 vorgesehen ist. Sowohl für die Leitungsstränge als auch die Trennschalter ist der besseren Übersichtlichkeit halber jeweils dasselbe Bezugszeichen verwendet worden, obwohl unterschiedliche Ausgestaltungen in Betracht kommen. Im Übrigen könnten hier auch Transformatoren vorgesehen sein, die der Einfachheit halber nicht dargestellt sind. Die Trennschalter 338, und im Übrigen auch die Netztrennschalter 332, sind der Übersichtlichkeit halber in geöffnetem Zustand dargestellt, aber im Betrieb des Netzabschnitts sind natürlich nicht alle Netztrennschalter und Trennschalter geöffnet. Die Darstellung soll also nicht einen geöffneten Zustand veranschaulichen, sondern den jeweiligen Schalter in beliebiger Schalterstellung.

Zur Steuerung des Netzabschnitts ist nun der Führungsregler 302 veranschaulicht. Erweist einen Netztopologieregler 342, einen Stützregler 344 und einen Lastregler 346 auf. Auch diese Darstellung dieser drei Regler als Blöcke dient der Veranschaulichung. Der Führungsregler 302 kann zwischen diesen drei Reglertypen auswählen, sie aber auch kombiniert verwenden. Sie unterscheiden sich in ihrer Funktionalität und in der Veranschaulichung der Fig. 3 besonders auch darin, welche Elemente sie ansteuern. Sie können aber auch als ein Regler integriert sein, der je nach auszuführender Regelung entsprechend die Elemente ansteuert oder nicht ansteuert.

Insoweit sind auch diverse Datenleitungen 348 dargestellt, die unterschiedliche Regler mit unterschiedlichen Elementen verbinden. Diese sind auch veranschaulichend zu verstehen. Wenn die drei Regler in einem Gesamtregler integriert sind und ihre unterschiedlichen Aufgaben bzw. Funktionsweisen insoweit nur funktional je nach Situation abgerufen werden, so kann auch eine einzelne Datenleitung von einem solchen Gesamtregler zu allen zu steuernden Elementen geführt werden, beispielsweise als Datenbus. Aus dem Grund sind auch die unterschiedlichen Datenleitungen 348 mit demselben Bezugszeichen gekennzeichnet.

Jedenfalls veranschaulicht die Fig. 3, dass der Führungsregler auf drei Regler, nämlich den Netztopologieregler 342, den Stützregler 344 und den Lastregler 346 Zugriff hat und damit unterschiedliche Elemente ansteuern kann.

Dabei ist vorgesehen, dass der Netztopologieregler 342 sämtliche Netzknoten 334 ansteuern kann und damit sämtliche Trennschalter 338 jedes Netzknotens 334, wie nämlich in der Vergrößerung A gezeigt, ansteuern kann. Dadurch kann der Netztopologieregler 342 durch entsprechendes Öffnen oder Schließen von Trennschaltern 338 die Topologie des Netzabschnitts 300 und damit des elektrischen Versorgungsnetzes, von dem dieser Netzabschnitt ein Teil ist, verändern.

Die Pfeile an allen Datenleitungen 348 weisen sowohl zum jeweiligen Regler als auch zum jeweiligen anzusteuernden Element. Damit wird zum Ausdruck gebracht, dass die Regler nicht nur eine Ansteuerung vornehmen können, also auf das jeweilige Element einwirken können, sondern dass sie auch von dort Daten empfangen können, nämlich Sensordaten und insbesondere Daten zu Schalterstellungen oder anderen Zuständen des jeweiligen Elements, also insbesondere des jeweiligen Erzeugers, Verbrauchers oder Schaltelementes.

Der Stützregler 344 ist dabei mit den Erzeugern verbunden, nämlich dem Windpark 304, der Photovoltaikanlage 306 und den beiden konventionellen Kraftwerken 308 und 309. Dabei ist sowohl eine unmittelbare Ansteuerung des jeweiligen Erzeugers vorgesehen als auch eine Ansteuerung des jeweils zugeordneten Netztrennschalters 332. Die Darstellung ist insoweit allgemein gehalten und es kommt auch in Betracht, dass manche Ansteuerung nicht vorgesehen ist oder nicht genutzt wird. Insbesondere bei dem als Kernkraftwerk angedeuteten konventionellen Erzeuger 309 oder dem als Kohlekraftwerk angedeuteten konventionellen Erzeuger 308 sind solchen Ansteuerungen enge Grenzen gesetzt. Es kommt aber insbesondere eine Erfassung von Zustandsdaten auch dieser Erzeuger in Betracht.

Insbesondere ist aber vorgesehen, den Windpark und die Photovoltaikanlage bzw. entsprechend viele Windparks oder Photovoltaikanlagen, für die diese beiden Einzelelemente repräsentativ stehen, anzusteuern und insbesondere auch ihre Leistungsabgabe unmittelbar oder durch Veränderung von Regelparametern zu verändern. Auch eine Trennung vom Netz durch die entsprechende Ansteuerung der Netztrennschalter 332 kommt hier in Betracht.

Schließlich ist noch der Lastregler 346 veranschaulicht, der sämtliche Lasten ansteuert. Auch hier kommt grundsätzlich eine Ansteuerung der jeweiligen Last als solche in Betracht und auch ihres Netztrennschalters. Aber auch hier geht es um eine Veranschaulichung und es ist klar, dass die repräsentativ gezeigte Stadt 320 nur in einem Ausnahmefall vom Netz getrennt werden sollte. Die Ansteuerung der Stadt kann so realisiert werden, das bestimmt Verbraucher innerhalb der Stadt angesteuert werden.

Zur Veranschaulichung und auch repräsentativ für die Ansteuerung anderer Verbraucher weist sowohl der motorische Verbraucher 324 mit Frequenzumrichteransteuerung als auch der ohmsche Verbraucher 326 mit Frequenzumrichteransteuerung einen entsprechenden Frequenzumrichter 325 bzw. 327 auf. Diese beiden Frequenzumrichter 325 und 327 können netzseitig, also zu dem Querstrang 314 hin, bei der Leistungsentnahme beispielsweise die Phasenlage steuern, also ob und wie viel Blindleistung entnommen wird. Gleichzeitig kann in einem solchen Frequenzumrichter 325 oder 327 ein frequenzabhängiges Verhalten implementiert sein, oder es kann implementiert sein, dass ein frequenzabhängiges Verhalten gerade nicht vorliegt. Sowohl der motorische Verbraucher 324 als auch der ohmsche Verbraucher 326 könnten jeweils - quasi aus Netzsicht - als motorische Verbraucher oder als ohmsche Verbraucher betrieben werden, indem diese Funktionalität durch den jeweiligen Frequenzumrichter 325 oder 327 emuliert wird. Dadurch kann gesteuert werden, nämlich durch den Lastregler 346 gesteuert werden, wie sich diese beiden Verbraucher verhalten und dadurch kann insgesamt die Lastsituation des Netzabschnitts 300 gesteuert werden.

Eine andere Variante soll mithilfe des motorischen Verbrauchers 328 und des ohmschen Verbrauchers 330 erläutert werden. Diese beiden Verbraucher weisen keinen Frequenzumrichter auf und sind insoweit unmittelbar über den jeweiligen Netztrennschalter 332 mit dem Netzabschnitt, hier nämlich dem Querstrang 315, verbunden. Auch diese beiden Verbraucher stehen repräsentativ für viele solcher Verbraucher. Wird nun der Netztrennschalter 332 des motorischen Verbrauchers 328 geschlossen, und mit ihm die Netztrennschalter vieler weiterer motorischer Verbraucher, und der Netztrennschalter 332 des ohmschen Verbrauchers 330 geöffnet, und mit ihm viele weitere Netztrennschalter weiterer ohmscher Verbraucher, so wird insgesamt eine Lastsituation geschaffen, bei der die Verbraucher ein stark motorisches Verhalten aufweisen.

Umgekehrt kann natürlich auch vorgesehen sein, dass viele ohmsche Verbraucher zugeschaltet und viele motorische Verbraucher getrennt werden. Ebenso kann ein Verhältnis eingestellt werden, wenn einige ohmsche Verbraucher und einige motorische Verbraucher verbunden sind.

Somit sind in Fig. 3 diese Funktionalitäten des Netztopologiereglers 342, des Stützreglers 344 und des Lastreglers 346 veranschaulicht. Die beschriebenen Funktionalitäten können aber durch einen Regler realisiert werden und die dafür an die Erzeuger oder Verbraucher zu übertragenden Signale durch einen entsprechenden Datenbus vorgesehen sein. Datenbusse, die mit vielen Teilnehmern verbunden sind, sind grundsätzlich bekannt und können hier eingesetzt werden. Auch eine nicht drahtgebundene Verbindung kommt ganz oder teilweise in Betracht.

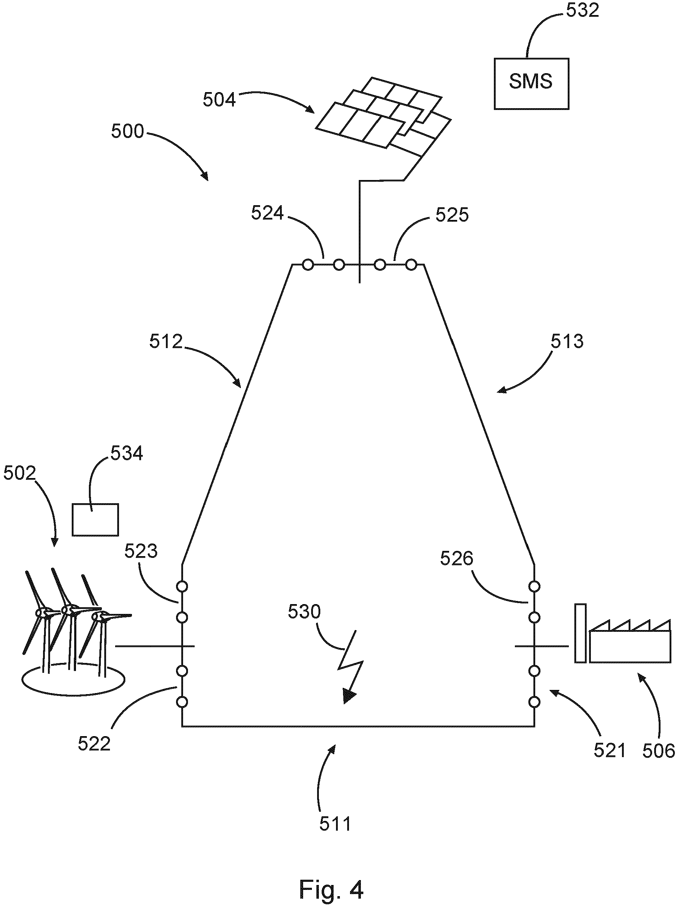

**Fig. 4** zeigt eine vereinfachte Netztopologie 500 zur Veranschaulichung einer weiteren Ausführungsform. Darin sind ein Windpark 502, eine Photovoltaikanlage 504 und ein Verbraucher 506 enthalten. Der Windpark 502, die Photovoltaikanlage 504 und der Verbraucher 506 stehen aber auch repräsentativ für weitere entsprechende Elemente, nämlich Erzeuger bzw. Verbraucher.

Der Windpark 502, die Photovoltaikanlage 504 und der Verbraucher 506 sind über eine erste, zweite und dritte Übertragungsleitung 511, 512 und 513 miteinander verbunden. Jede dieser Übertragungsleitungen 511, 512 und 513 kann jeweils an zwei Seiten durch einen von sechs Trennschaltern, nämlich einem ersten bis sechsten Trennschalter 521 bis 526 getrennt werden.

Eine solche Trennung kann dadurch ausgelöst werden, dass durch den entsprechenden Trennschalter ein so hoher Strom, nämlich besonders ein Kurzschlussstrom, fließt, der den betreffenden Trennschalter auslöst. Dazu kann bei Bedarf ein entsprechend hoher Kurzschlussstrom verursacht werden, nämlich durch einen Erzeuger, wie den Windpark 502 oder die Photovoltaikanlage 504 eingespeist werden, oder durch einen Verbraucher wie den Verbraucher 506 konsumiert werden. Dadurch können gezielt Übertragungsleitungen abgetrennt werden und dadurch Fehler auf solchen Übertragungsleitungen isoliert werden.

Beispielhaft ist an der ersten Übertragungsleitung 511 ein Netzfehler 530 angedeutet. Die Übertragungsleitung 511 kann nun durch Auslösen des ersten und zweiten Trennschalters 521 und 522 getrennt werden und dadurch der Netzfehler 530 isoliert werden.

Dazu wird nun vorgeschlagen, dass zunächst eine Netzstabilitätseigenschaft erfasst wird. Eine Netzstabilitätseigenschaft wäre hier u.a., ob eine solche Abtrennung der Übertragungsleitung 511 der vereinfachten Netztopologie 500 überhaupt möglich ist. Das sicherzustellen, kann als eine Stabilisierungsmaßnahme angesehen werden. Einen entsprechenden Kurzschlussstrom bereitstellen zu können, bzw. eine ausreichende Höhe eines solchen Kurzschlussstromes zu gewährleisten, kann auch als Kurzschlussstrommaß bezeichnet werden.

Zum Auslösen der Abtrennung können mögliche Kurzschlussströme von unterschiedlichen Quellen erzeugt werden und/oder von unterschiedlichen Verbrauchern unterschiedliche Kurzschlussströme absorbiert werden. Um das Beispiel der unterschiedlichen Quellen zu erläutern, kann ein Kurzschlussstrom bzw. ein Teil davon für den zweiten Trennschalter 522 von dem Windpark 502 bereitgestellt werden. Ein Teil des Kurzschlusses kann auch über die zweite Übertragungsleitung 512 von der Photovoltaikanlage 504 bereitgestellt werden. Die Photovoltaikanlage 504 kann auch gezielt nur zum Bereitstellen eines Kurzschlussstromes aktiviert werden, wenn der Kurzschlussstrom nicht ausreichen würde. Das Bereitstellen eines Blindstromes kann ohne Sonneneinstrahlung erfolgen.

Es gibt somit verschiedene Möglichkeiten, den benötigten Kurzschlussstrom daraus zusammenzusetzen, und jede dieser Möglichkeiten kann als eine Stabilisierungsmaßnahme angesehen werden, aus der ausgewählt werden kann.

Die Auswahl, wie der Kurzschlussstrom zusammengesetzt wird, hängt dann von Stabilisierungsrandbedingungen ab. Als Stabilisierungsrandbedingungen kommen wenigstens eine Leistungsflussvorgabe, eine Energiebereitstellungsvorgabe und eine Stabilitätsvorgabe in Betracht. Die Stabilitätsvorgabe kann zu der Stabilisierungsmaßnahme ein weiteres Stabilitätskriterium liefern. Hier ist eine Stabilisierungsrandbedingung, dass der Windpark 502 nicht überlastet wird, was insoweit eine Erzeugereigenschaft ist, und danach weiter stabil einspeisen kann. Eine weitere Stabilisierungsrandbedingung ist, möglichst wenig, oder zumindest nicht zu viel Leistung über die zweite Übertragungsleitung 512 zu übertragen, was eine übergeordnete Netzeigenschaft sein kann, jedenfalls dann, wenn der Windpark 502, die Photovoltaikanlage 504 und der Verbraucher 506 jeweils repräsentativ für einen Netzabschnitt stehen, die jeweils durch eine der drei Übertragungsleitungen 511, 512 und 513 verbunden sind.

Um all das zu steuern, ist die Stabilisierungssteuerung 532 vorgesehen, die mit dem Windpark 502, der Photovoltaikanlage 504 und dem Verbraucher 506 verbunden sein kann. Es kommt aber bspw. auch in Betracht, dass die Stabilisierungssteuerung 532 Teil des Windparks 502 ist, besonders Teil einer angedeuteten zentralen Parksteuerung 534 des Windparks 502. Die Stabilisierungssteuerung 532 kann dabei einen Netztopologieregler bilden und Teil eines Führungsreglers sein, oder als Führungsregler arbeiten.

## Patentansprüche

1. Verfahren zum Einspeisen elektrischer Leistung in ein elektrisches Versorgungsnetz, das eine Netzspannung und eine Netzfrequenz aufweist, und das elektrische Versorgungsnetz (120) umfasst
- mehrere Verbraucher (324-327, 328, 330) zum Verbrauchen elektrischer Leistung aus dem elektrischen Versorgungsnetz (120), und
- mehrere Erzeuger (304, 306, 308, 309) zum Erzeugen elektrischer Leistung und zum Einspeisen der elektrischen Leistung in das elektrische Versorgungsnetz (120), wobei
- zum Führen des Einspeisens eine Einspeiseführung vorgesehen ist und
- die Einspeiseführung berücksichtigt
- eine Leistungsflussvorgabe, die eine Vorgabe für einen Leistungsfluss in wenigstens einem Netzabschnitt (300) des elektrischen Versorgungsnetzes (120) bildet,
- eine Energiebereitstellungsvorgabe, die eine Vorgabe zum Bereitstellen einer Energiemenge an wenigstens einem Verbrauchspunkt des elektrischen Versorgungsnetzes (120) bildet, und
- eine Stabilitätsvorgabe, die wenigstens ein Stabilitätskriterium für das elektrische Versorgungsnetz vorgibt, wobei
- die Einspeiseführung in Abhängigkeit von
- der Leistungsflussvorgabe,
- der Energiebereitstellungsvorgabe und
- der Stabilitätsvorgabe
- einen Führungsregler (302) zum Unterstützen des Einspeisens auswählt oder einstellt.

2. Verfahren nach Anspruch 1, **dadurch gekennzeichnet, dass**
als Führungsregler (302) oder als Teil davon wenigstens ein Regler ausgewählt wird aus der Reglergruppe aufweisend:
- einen Netztopologieregler (342), der dazu vorbereitet ist, eine Netztopologie des elektrischen Versorgungsnetzes (120) zu ändern,
- einen Stützregler (344), der dazu ausgebildet ist, eine Netzspannung, eine Netzfrequenz und/oder eine Leistungsbilanz des elektrischen Versorgungsnetzes (120) zu regeln, und
- einen Lastregler (346), der dazu ausgebildet ist, wenigstens einen der Verbraucher (324-327, 328, 330) zu steuern.

3. Verfahren nach Anspruch 1 oder 2, **dadurch gekennzeichnet, dass** im Führungsregler (302) wenigstens eine Stabilisierungsmaßnahme implementiert ist aus der Liste aufweisend:
- ein Einstellen einer Umrichterpenetration eines Netzabschnitts (300) des elektrischen Versorgungsnetzes (120), wobei die Umrichterpenetration für den Netzabschnitt (300) ein Verhältnis angibt von einer Summe durch Umrichter eingespeister Leistung zu insgesamt durch alle Erzeuger eingespeister Leistung,
- ein Bereitstellen einer vorbestimmten Mindestkurzschlussstromkapazität, um ein Einspeisen eines Kurzschlussstromes wenigstens bis zu einer Höhe eines vorbestimmten Mindestkurzschlussstromes bei Bedarf zu ermöglichen, zumindest an einem Netzknoten (334), um dadurch jeweils einen Trennschalter (332,338, 521-526) auszulösen, um gezielt einen Netzabschnitt (300) abzutrennen,
- eine Aktivierung wenigstens eines Umrichters einer Photovoltaik-Anlage (306, 504?) zum Bereitstellen eines Kurzschlussstromes oder ergänzenden Kurzschlussstromes zum Aktivieren eines Trennschalters (332,338, 521-526), um gezielt einen Netzabschnitt (300) abzutrennen,
- ein Aktivieren oder ein Einstellen einer frequenzabhängigen Leistungsregelung,
- eine Aktivierung eines mechanisch rotierenden Phasenschiebers, um eine Schwungmasse, einen Kurzschlussstrom und/oder Blindleistung bereitzustellen,
- eine Aktivierung einer spannungsprägenden Arbeitsweise wenigstens eines regenerativen Erzeugers der Erzeuger (304, 306, 308, 309), insbesondere Windenergieanlage (100) oder Photovoltaikanlage (306, 504)
- eine Aktivierung oder ein Steuern wenigstens einer in Abhängigkeit von der Netzfrequenz arbeitenden Last, die eine Leistungsaufnahme in Abhängigkeit der Netzfrequenz steuert und
- Bereitstellen wenigstens einer verfügbaren Momentanreserve, insbesondere eines regenerativen Erzeugers, oder Erhöhen einer verfügbaren Momentanreserve, insbesondere Erhöhen einer verfügbaren Momentanreserve wenigstens einer Windenergieanlage (100) der regenerativen Erzeuger (304, 306, 308, 309) durch Erhöhen einer Rotordrehzahl der Windenergieanlage (100).

4. Verfahren nach einem der vorstehenden Ansprüche, **dadurch gekennzeichnet, dass**
- eine bzw. die frequenzabhängige Leistungsregelung durch eine Übertragungsfunktion gekennzeichnet ist, die einen Zusammenhang zwischen einer erfassten Frequenz und einer in Abhängigkeit von der erfassten Frequenz einzustellenden Leistung beschreibt, und
- die Übertragungsfunktion in Abhängigkeit von
- der Leistungsflussvorgabe,
- der Energiebereitstellungsvorgabe und
- der Stabilitätsvorgabe
eingestellt wird, wobei insbesondere
- ein Verstärkungsfaktor eingestellt wird,
- eine Aktivierungszeitkonstante eingestellt wird, durch die eine Zeit festgelegt ist, in der nach Erreichen eines Frequenzwertes ein zugeordneter Leistungswert zu erreichen ist,
- eine Regeldynamik eingestellt wird und/oder
- ein Leistungsverstellgradient eingestellt wird, der für einen Betrag einer frequenzabhängigen Leistungsänderung einen Wert festlegt;

5. Verfahren nach einem der vorstehenden Ansprüche, **dadurch gekennzeichnet, dass**
- eine bzw. die Aktivierung einer spannungsprägenden Arbeitsweise wenigstens eines regenerativen Erzeugers der Erzeuger (304, 306, 308, 309), so erfolgt, dass
- wenigstens ein regenerativer Erzeuger mehrere Einspeiseeinheiten aufweist, die insbesondere jeweils als Umrichter ausgebildet sind, und
- zur Aktivierung einer spannungsprägenden Arbeitsweise wenigstens eine der Einspeiseeinheiten von einer stromprägenden Arbeitsweise in eine spannungsprägende Arbeitsweise wechselt.

6. Verfahren nach einem der vorstehenden Ansprüche, **dadurch gekennzeichnet, dass**
- eine bzw. die Aktivierung oder ein bzw. das Steuern wenigstens einer in Abhängigkeit von der Netzfrequenz arbeitenden Last, die eine Leistungsaufnahme in Abhängigkeit der Netzfrequenz steuert, so erfolgt, dass
- eine Lastsituation erfasst wird und die Aktivierung bzw. das Steuern der wenigstens einen Last in Abhängigkeit von der erfassten Lastsituation erfolgt, und/oder dass
- zum Aktivieren bzw. Steuern der wenigstens einen in Abhängigkeit von der Netzfrequenz arbeitenden Last aus mehreren zur Verfügung stehenden Lasten ausgewählt wird, wobei
- wenigstens eine der Lasten eine ohmsche Last ist, oder als ohmsche Last betrieben wird, die durch eine im Wesentlichen von der Netzfrequenz unabhängige Leistungsaufnahme gekennzeichnet ist, und
- wenigstens eine weitere der Lasten eine motorische Last ist, oder als motorische Last betrieben wird, die durch eine im Wesentlichen stark von der Netzfrequenz abhängige Leistungsaufnahme gekennzeichnet ist.

7. Verfahren nach einem der vorstehenden Ansprüche, **dadurch gekennzeichnet, dass**
- eine Lastsituation erfasst wird, wobei
- eine Lastsituation beschreibt, wieviel Leistung durch welche Art Verbraucher verbraucht wird, insbesondere, wieviel Leistung jeweils oder anteilig verbraucht wird durch
- ohmsche Verbraucher (326, 330), und
- motorische Verbraucher (324, 328) und optional
- mittels Frequenzumrichter (325,327) gesteuerter Verbraucher, und wobei
- der Führungsregler (302) in Abhängigkeit von der erfassten Lastsituation ausgewählt oder einstellt wird.

8. Netzsteuereinrichtung zum Steuern eines elektrischen Versorgungsnetzes (120) zum Einspeisen elektrischer Leistung in das elektrische Versorgungsnetz (120), das eine Netzspannung und eine Netzfrequenz aufweist, und das elektrische Versorgungsnetz (120) umfasst
- mehrere Verbraucher (324-327) zum Verbrauchen elektrischer Leistung aus dem elektrischen Versorgungsnetz (120), und
- mehrere Erzeuger (304, 306) zum Erzeugen elektrischer Leistung und zum Einspeisen der elektrischen Leistung in das elektrische Versorgungsnetz (120), wobei
- zum Führen des Einspeisens eine Einspeiseführung vorgesehen ist und
- die Einspeiseführung berücksichtigt
- eine Leistungsflussvorgabe, die eine Vorgabe für einen Leistungsfluss in wenigstens einem Netzabschnitt (300) des elektrischen Versorgungsnetzes (120) bildet,
- eine Energiebereitstellungsvorgabe, die eine Vorgabe zum Bereitstellen einer Energiemenge an wenigstens einem Verbrauchspunkt des elektrischen Versorgungsnetzes (120) bildet, und
- eine Stabilitätsvorgabe, die wenigstens ein Stabilitätskriterium für das elektrische Versorgungsnetz (120) vorgibt, wobei
- die Einspeiseführung in Abhängigkeit von
- der Leistungsflussvorgabe,
- der Energiebereitstellungsvorgabe und
- der Stabilitätsvorgabe
- einen Führungsregler (302) zum Unterstützen des Einspeisens auswählt.

9. Netzsteuereinrichtung nach Anspruch 8, **dadurch gekennzeichnet, dass**
- eine zentrale Steuereinheit vorgesehen ist,
- auf der zentralen Steuereinheit die Einspeiseführung implementiert ist und/oder
- die Netzsteuereinrichtung, insbesondere die zentrale Steuereinheit dazu vorbereitet ist, ein Verfahren nach einem der Ansprüche 1 bis 6 auszuführen.

10. Netzabschnitt (300) eines elektrischen Versorgungsnetzes (120) mit
- wenigstens einer Windenergieanlage (100) oder einem Windpark (112, 304, 502) mit mehreren Windenergieanlagen,
und das elektrische Versorgungsnetz (120) umfasst
- mehrere Verbraucher (324-327, 328, 330) zum Verbrauchen elektrischer Leistung aus dem elektrischen Versorgungsnetz (120), und
- mehrere Erzeuger (304, 306, 308, 309) zum Erzeugen elektrischer Leistung und zum Einspeisen der elektrischen Leistung in das elektrische Versorgungsnetz (120), wobei
- diese Erzeuger (304, 306, 308, 309) die wenigstens eine Windenergieanlage (100) oder den wenigstens einen Windpark (112, 304, 502) umfassen,
- zum Führen des Einspeisens eine Einspeiseführung vorgesehen ist und
- die Einspeiseführung berücksichtigt
- eine Leistungsflussvorgabe, die eine Vorgabe für einen Leistungsfluss in wenigstens einem Netzabschnitt (300) des elektrischen Versorgungsnetzes (120) bildet,
- eine Energiebereitstellungsvorgabe, die eine Vorgabe zum Bereitstellen einer Energiemenge an wenigstens einem Verbrauchspunkt des elektrischen Versorgungsnetzes (120) bildet, und
- eine Stabilitätsvorgabe, die wenigstens ein Stabilitätskriterium für das elektrische Versorgungsnetz (120) vorgibt, wobei
- die Einspeiseführung in Abhängigkeit von
- der Leistungsflussvorgabe,
- der Energiebereitstellungsvorgabe und
- der Stabilitätsvorgabe
- einen Führungsregler (302) zum Unterstützen des Einspeisens auswählt, und
- der Führungsregler (302) zum Steuern des elektrischen Versorgungsnetzes (120) die wenigstens eine Windenergieanlage (100) oder den wenigstens einen Windpark (112, 304, 502) ansteuert.

11. Netzabschnitt nach Anspruch 10, **dadurch gekennzeichnet, dass**
- eine zentrale Steuereinheit vorgesehen ist,
- auf der zentralen Steuereinheit die Einspeiseführung implementiert ist und/oder
- der Netzabschnitt (300), insbesondere die zentrale Steuereinheit dazu vorbereitet ist, ein Verfahren nach einem der Ansprüche 1 bis 7 auszuführen.
